(19) Europäisches Patentamt
European Patent Office
Office européen des brevets

(11) EP 2 269 956 B1

(12) **EUROPEAN PATENT SPECIFICATION**

(45) Date of publication and mention
of the grant of the patent:
**11.09.2019 Bulletin 2019/37**

(51) Int Cl.:
**C02F 1/461** *(2006.01)*          *C02F 1/00* *(2006.01)*
*C02F 1/30* *(2006.01)*

(21) Application number: **08734141.8**

(22) Date of filing: **23.04.2008**

(86) International application number:
**PCT/CN2008/070783**

(87) International publication number:
**WO 2009/129670 (29.10.2009 Gazette 2009/44)**

(54) **A MICRO-CURRENT ELECTROLYSIS STERILIZATION ALGAECIDE DEVICE AND METHOD**

MIKROSTROMELEKTROLYSE-STERILISATIONSALGIZIDVORRICHTUNG UND VERFAHREN

DISPOSITIF ET PROCEDE ALGICIDES DE STERILISATION PAR ELECTROLYSE A MICRO-COURANT

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**05.01.2011 Bulletin 2011/01**

(73) Proprietor: **Headway Technology Group (Qingdao) Co., Ltd.**
**Huite Industrial City**
**Qingdao**
**Shandong 266101 (CN)**

(72) Inventors:
• **CAO, Xueliang**
**Qingdao Shandong 266101 (CN)**
• **CAO, Xuelei**
**Qingdao Shandong 266101 (CN)**
• **DU, Qinghua**
**Qingdao Shandong 266101 (CN)**
• **LIU, Bingyan**
**Qingdao Shandong 266101 (CN)**
• **CHEN, Ye**
**Heilongjiang 150001 (CN)**

(74) Representative: **Cabinet Chaillot**
**16/20, avenue de l'Agent Sarre**
**B.P. 74**
**92703 Colombes Cedex (FR)**

(56) References cited:
WO-A1-94/00860          CN-A- 1 594 121
CN-Y- 2 457 123          CN-Y- 2 748 475
JP-A- S6 125 687         JP-A- 61 025 687
JP-A- 2006 239 531

Remarks:
The file contains technical information submitted after the application was filed and not included in this specification

## Description

## FIELD OF TECHNOLOGY

The invention relates to a sterilization algaecide device and method, more particularly a micro-current electrolysis sterilization algaecide device and method.

## Background technology

Cyanobacteria is also referred to as blue algae or blue-green algae, belonging to the procaryotic mirco-organism, which is gram-negative, consists of peptidoglycan, has similar cell wall to bacteria, has no karyotheca and nucleolus in the cell nucleus structure, and do not perform mitosis.

Cyanobacteria, a unicellular organism, is generally bigger than bacteria with diameter or width about 3-15$^{U}$m. Cyanobacteria rarely lives alone, but gets together after splitting to form nematic or unicellular colonies, and even visible big-sized colonies in case many individuals gather together. Cyanobacteria mainly lives at 0.5m below water surface, and is generally called as blue algae or blue-green algae since most of cyanobacterias are blue or blue-green.

Cyanobacterias are widely distributed from the Antarctic to the Arctic, from the ocean to the mountainous regions, usually grow in the rocks, barks or in the ponds, lakes, and also reproduce well so that the water color varies from the cyanobacterias. Certain cyanobacterias can generate a grassy or foul smell.

Cyanobacteria has a pigment system, mainly comprising leucocyan, as well as chlorophyll $\alpha$, carotene or phycoerythrin. Given different percentages of pigments contained in the cell of every kind of cyanobacteria, cyanobacteria are available with blue, green and red colors. Cyanobacteria needs simple nutrition and does not require vitamins, which take nitrate or ammonia as a source of nitrogen. Many nitrogen-fixing species are available. Certain species have round heterocysts, which are distributed along the protonemas or individually at one end, where nitrogen-fixation for cyanobacteria is possible. Cyanobacteria allows for oxygen-evolving photosynthesis as an obligate photolithotroph, with reaction shown below:

$$CO_2 + H_2O = [CH_2O] \text{ cell substance} + O_2 \text{ (g)}$$

These characteristics are similar to common algae. The main reproduction mode of cyanobacteria is fission, and certain species have spores. The nematic cyanobacteria can be broken down into reproductive bodies, but no sexual reproduction exists.

Eutrophication of water bodies will occur when numerous substances containing nitrogen and phosphor are discharged into water, leading to excessive reproduction of cyanobacteria to cover the water surface, thus forming different colors, which is called "water bloom" in fresh water and "red bloom" in seawater. Cyanobacterias that can form "water bloom" include some species in Microcystis, Anabaena and Oscillatoria. The "water bloom" formed by cyanobacteria is highly toxic, e.g. poultry or livestock will be poisoned to death within 1 hour or a few minutes after drinking water containing Microcystis aerugeosa and Anabaena flos-aguae, whilst aquatic organisms (e.g. fish) may also be poisoned to death. As water reoxygenation is blocked due to coverage of numerous cyanobacteria on the water surface, along with putrefaction of a great number of dead cyanobacteria, the water body may stink due to oxygen shortage, leading to a vicious cycle. (Ren Nanqi et al, Microbiology of pollution control, p38 - 39, Press of Harbin Institute of Technology, 2002).

In addition to numerous blue algae generated from eutrophication, the natural water bodies contain many harmful bacteria and viruses, such as coliform, enterococcus group and vibrio cholerae, which may be taken to other water bodies as ballast water collected by the ships, thus causing ecological disaster. Almost all ships are equipped with ballast water system in order to reduce the bending moment and shear force as well as the vibration of ships. Experiments show that, numerous bacteria, pathogens and other non-local micro-organisms exist in the ballast water of ballast water cabin, which can multiply rapidly and survive a few weeks or even longer in the ballast water cabin containing rich iron elements. The local ecological environment may be unbalanced if such alien or new micro-organisms are discharged from the ships. Generally speaking, such micro-organisms are harmful to the human bodies, posing threat to the environment, ships and personal health or damage to goods in the event of leakage of ballast water. This issue grows more important with the increasing awareness of environmental protection. According to the investigation of IMO (International Maritime Organization), 4 kinds of toxic algae (e.g. dinoflagellate) are spread to China along with the ships' ballast water, leading to a wide range of red bloom disaster (Liu Fubin, Ships, Vol 4, August 2006). In 2004, SEPA announced that, the direct economic losses caused by biological invasion amounted to RMB 57.4 billion, of which marine biological invasion is a major contributing factor.

Various efforts have been made to prevent water pollution or ecological disasters from the ballast water containing harmful creatures and pathogens. According to Article 196 (1) of UNCLOS (United Nations Conference on the Law of the Sea) issued in 1982 by IMO, "States shall take all measures necessary to prevent, reduce and control pollution of the marine environment resulting from the use of technologies under their jurisdiction or control, or the intentional or accidental introduction of species, alien or new, to a particular part of the marine environment, which may cause significant and harmful changes thereto". As per Article 34 (b) of Sustainable Development Plan of 2002 World Summit, it's understood that uncontrolled discharge of ballast water and sediment by the ships has caused the transfer of harmful aquatic organisms and pathogens, posing damage to the environment, human health, properties and resources, so it urges the interested parties to take actions on formulating measures of resolving the invasion of alien organisms through ballast water. Currently, some countries have taken unilateral actions to prevent, minimize or finally eliminate the risks of harmful organisms and pathogens imported to harbors via ships, and this issue has raised worldwide concern, making it necessary to formulate a universal regulation and guideline that can be implemented efficiently and interpreted uniformly to push forward the development of safer and more effective ballast water management measures, thus preventing, minimizing and finally eliminating the transfer of harmful organisms and pathogens. Accordingly, IMO formulated "International Convention for the Control and Management of Ships' Ballast Water and Sediment", with its aim of preventing, minimizing and finally eliminating the risks of environment, human health, properties and resources arising from the transfer of harmful organisms and pathogens by means of controlling and managing the ship's ballast water and sediment, and also avoiding unnecessary negative impact thereto while encouraging and promoting the development of relevant knowledge and technologies; notwithstanding the U.S. and China haven't yet signed this Convention, many developed countries are already signatory states, showing that the global management of ballast water as per this Convention is just a matter of time.

The equipments and facilities for controlling the blue algae of large-area water bodies and preventing the invasion of foreign harmful aquatic organisms and pathogens must be characterized in:

(1) Quick speed of killing micro-organisms and pathogens: for large-area water bodies, if the processed water enters into the main water body and biocide is added, the water will be diluted and the bactericidal capacity is diminished along with a large number of surviving micro-organisms, resulting in large-scale reproduction and poorer control effect; for application to treatment of ballast water requiring fast pumping and discharge, the processed water cannot reach the standard in the event of killing slowly the micro-organisms and pathogens;

(2) High sterilization efficiency: as per the stipulation of D-2 of 2004 International Convention for the Control and Management of Ships' Ballast Water and Sediment, the performance index of the discharged ballast water must meet:

(a). less than 10 viable organisms per cubic metre greater than or equal to 50 micrometres in minimum dimension; and

(b). less than 10 viable organisms per millilitre less than 50 micrometres in minimum dimension and greater than or equal to 10 micrometres in minimum dimension; and

(c). as a human health standard, discharge of the indicator microbes shall not exceed the specified concentrations described below:

(I). Toxicogenic vibrio cholerae with less than 1 colony forming unit (cfu) per 100 millilitres or less than 1 cfu per 1 gram (wet weight) zooplankton samples;

(II). Escherichia coli less than 250 cfu per 100 millilitres

(III). Intestinal Enterococci less than 100 cfu per 100 milliliters;

(3) No secondary damage to ecological environment;

(4) Big treatment capacity: with regard to eutrophication of large water body such as lakes, sterilization/algaecide capacity is a crucial factor; for treatment of ships' ballast water, the unit capacity is generally over 300M$^3$/hr since the ships cannot stay a long time.

Existing water eutrophication and blue algae treatment technology system as well as ballast water treatment technology system mainly comprise: (1) biocide, (2) screen trapping and membrane treatment, (3) ultrasonic wave, (4) high-pressure algae removal, (5) biological treatment, (6) ecological treatment, (7) ultraviolet sterilization, and (8) sterilization with electrolytic active substances.

**Biocide**

China patent application No. 02100332 discloses an oxidized bromine compound biocide-Xiu Lu Wei that's applied to industrial water, public occasions and sewage recycling fields; China patent application No. 200510025284 discloses an aldehyde compound biocide comprising glutaraldehyde and quaternary ammonium; China patent application No. 200510025395 disclosed a biocide for sewage treatment that comprises isothiazolinone and dodecyl dimethyl benzyl ammonium chloride; WIPO discloses an international patent WO03002406 which generates copper ions for sterilization by copper anode electrolysis. The biocides are characterized in stronger biological toxicity and longer residual time, and can be applied domestically to sterilization in re-circulating sewage or cooling water system, but unsuitable for treatment of large eutrophic water bodies (such as lake) and ballast water to be discharged.

US2005016933 adopts the biocide by adding $C1O_2$; WO2005061388, US2004099608, US2003029811, JP200714439K, JP2006239556 and JP2006263563 separately disclose water treatment technologies and equipments by filtering and adding ozone as biocide, which are free of secondary pollution, and have certain advantages in sterilization of small-flux water bodies or potable water, but encounter higher operating cost for treatment of sterilization algaecide against ballast water or high-flux or large-area water bodies.

In general, biocide sterilization has satisfactory treatment effect for small water bodies, but cannot maintain a longer time, e.g. biocide is required again after 1-2 weeks in the summer. For treatment of large eutrophic water bodies, biocide sterilization has the disadvantages of higher operating cost and secondary pollution of biocide; for treatment of ballast water, the residue needs be subject to biological toxicity and toxicological evaluation.

**Screen trapping and membrane treatment**

Screen trapping and filtering are used mechanically to remove the blue algae, for instance, the treatment of extensive outbreak of blue algae in Dianchi Lake of Kunming in summer. The technology almost has no effect for large-area water bodies, which has the disadvantages that, the technology and equipments cannot remove efficiently harmful bacteria (toxic vibrio cholerae, coliform and enterococcus group) and viruses, nor meet the treatment demands of ballast water. The technology is mainly used as an auxiliary means of filtering out large particles or silts in water treatment.

At present, many developed countries employ membrane treatment and equipments to filter micro-organisms, plankton and bacteria, e.g.: JP2005342626, JP20060099157, JP2006223997 and JP2005342626 as well as WO2007114198 employ membrane treatment to filter the bacteria and micro-organisms from seawater or fresh water pumped as ballast water. However, the technology and equipments have the disadvantages of higher pressure and energy consumption, and easy pollution and congestion of the membrane, as well as higher operating cost and unqualified treatment capacity for treatment of blue algae of large-area and high-flux water bodies.

**Ultrasonic wave**

Ultrasonic wave is characterized in not only strong vibration, but also cavitation to produce numerous micro-jets, enabling the liquids to generate strong impact on the container vessel. The function is applied to ultrasonic cleaning or to enhance the reaction effect, e.g.: China patent application No. 200510117457 discloses an ultrasonic internal electrolysis wastewater treatment method and device, and China patent application No. 99120675 discloses an ultrasonic water treatment method and device, which are applied to enhance the flocculation effect; China patent application No. 200610085548 discloses an azo dyes wastewater treatment method, and DE19919824 discloses an oxidative organic tin technology, which employ ultrasonic wave to accelerate chemical reaction. Micro-area high pressure generated from ultrasonic cavitation can be used for breaking up the cell, which can only be realized by gathering ultrasonic energy in a smaller area. Thus, existing ultrasonic technology and corresponding water treatment device can be more possibly used for small and circulating water bodies, e.g. an acousto-optic potable water sterilization device disclosed in China patent application No. 200610023241.

With an ultrasonic energy converter (28 to 200KHz) arranged onto the external wall of pipe, JP2006007184 realizes ultrasonic sterilization/algae removal of ballast water flowing through the pipe; JP2005021814 provides a tubular ultrasonic sterilization algaecide device for ballast water, wherein, an ultrasonic energy converter is installed at both sides of the tank, when water passes through the tank, the micro-organisms in the water is killed by the ultrasonic wave. Both patents have the disadvantages that the damage of ultrasonic wave to ultrasonic energy converter PZT arranged on opposite pipe wall or tank is not considered, the service life of ultrasonic energy converter is directly affected by non-ignorable damage of echoes perpendicular to the ultrasonic energy converter to PZT, and the operational stability and reliability of the device is reduced. As for an ultrasonic water treatment device published in patent application No. CN1998236857 and an annular and successive ultrasonic ballast water treatment device published in WO03095370, the ultrasonic energy converter also face the same problem.

In case ultrasonic technology is employed individually for treatment of blue algae in large-area or high-flux water bodies, existing ultrasonic device also has the disadvantages of higher energy consumption, higher operating cost and poorer sterilization effect, and is non-practical.

**High-pressure algae removal**

High-pressure sterilization and algae removal means water is pressurized to a certain degree, so that the cells of bacteria and algae are broken, e.g. JP2007021287, JP2005270754 and JP2005254138. As for treatment of blue algae in large-area water bodies, high-pressure algae removal also has the disadvantages of higher energy consumption and operating cost; as for treatment of ballast water, the technology faces the problem of treatment capacity and operating cost.

**Biological treatment**

Biological treatment is hoped to be used for eutrophic fresh water bodies, but biological treatment can cause biological disasters to native species with introduction of alien organisms. Moreover, blue algae is actually cyanobacteria, whose toxins in ppm level can cause death of fish and poultry within a few minutes. According to the report of Satoshi Nakai published in 2001 (ALGAL GROWTH INHIBITION EFFECTS AND INDUCEMENT MODES BY PLANT- PRODUCING PHENOLS SATOSHI NAKAI*, YUTAKA INOUE and MASAAKI H0S0MI, Water Research, Vol. 35, Issue 7, May 2001, Pages 1855-1859), grass and other aquatic plants can reduce the eutrophication of water to some extent, but few plants can release phenolic compounds that inhibit the growth of cyanobacteria. Biological treatment is unrealistic to red bloom of seawater system. At present, biological treatment of algae is still in the exploratory stage, and no successful case is available for biological treatment of numerous eutrophic water bodies on the international scale. Since blue algae comprises a variety of cyanobacteria species, Overall inhibition of the blue algae with one or several micro-organisms and phages is difficult. Besides, biological treatment is unsuitable for treatment of ballast water with respect to the speed and efficiency.

**Ecological treatment**

With the control of pollutions from external sources, the key to eutrophication control and ecological restoration of lakes depends on restoring aquatic higher plants to improve the self-purification capacity of water bodies. But the technology takes a longer time to control the blue algae in eutrophic water bodies, and the outbreak of blue algae in eutrophic water bodies can cover the water surface and prevent water re-oxygenation, meanwhile numerous dead cyanobacteria are decayed, and the dissolving oxygen in water bodies are consumed, so water releases bad odor, leading to the death of fish and other aquatic organisms in a malicious cycle. Similarly, ecological treatment is unsuitable for treatment of ballast water.

**Ultraviolet sterilization**

The scope and capacity of ultraviolet sterilization is restricted due to strong absorption of water bodies to ultraviolet. Generally, ultraviolet sterilization is applied to treatment of small-area and circulating water bodies with lower load, e.g.: ultraviolet water sterilization system published in China patent application No. 20051114, and household potable water treatment device published in 200610093390.

US2004134861 and US2005211639, as well as WO2004002895 and WO2005110607 disclose separately an ultraviolet continuous ballast water treatment device comprising multiple groups of ultraviolet lamps; in addition, the sterilization effect can be improved by combination of ultraviolet radiation and ultrasonic wave, e.g.: an acousto-optic potable water sterilization device published in China patent application No. 20060112, and an enhanced seawater ultraviolet sterilization filter for sea farming water treatment published in 200520087812; US5738780 is applied to treatment of ballast water by combining ultraviolet sterilization with DC electrolysis. The technologies cannot achieve satisfactory sterilization effect for high-load, high-flux and large-area water bodies due to the restrictions of the scope and capacity of ultraviolet sterilization.

**Sterilization with electrolytic active substances**

A HClO sterilization technology and device with electrolysis by adding salt has been developed, such as a "double-function water-electrolytic generator" published in China patent application No. 200610042972.2, a "small-sized disinfectant generator and method of application" published in 200510111126.7, a "portable water source sterilizer" published in 200520077629.2, a "high-concentration HClO disinfectant preparation method" published in 200510023766. 2. The technology can be implemented more conveniently and cost-effectively than the packages by adding directly bleaching powder, chlorine dioxide and hydrogen peroxide, but the salinity of the water bodies is increased; so all the measures for adding agents and increasing the salinity of water bodies are unacceptable, especially for sterilization and algae removal of eutrophic water bodies such as large-area lakes and reservoirs in the long run.

WO2006058261 discloses a ballast water treatment method and system with electrolytic HCIO salt, JP2001000974 discloses a ballast water electrolysis device, China patent application No. 200510046991 discloses a ballast water electrolysis system and China patent application No.200480027174 discloses an electrolysis device for water storage tank, all of which enables electrolysis of chlorine ions and water molecules in the water bodies into substances of high oxidation activity (CIO-, .0H, $H_2O_2$, (0)), and then oxidation of the cells, RNA and DNA of bacteria and algae for the purpose of inactivation, death and finally sterilization and algae removal. The treated water also keep the function of continuous sterilization.

However, the methods and systems have two disadvantages:

(1) The electrode spacing can meet the design requirement of ballast water electrolysis in seawater rather than in fresh water, since the ships may be berthed at the fresh water areas or harbors, where electrolytic voltage varies greatly due to the different conductivities of water bodies.

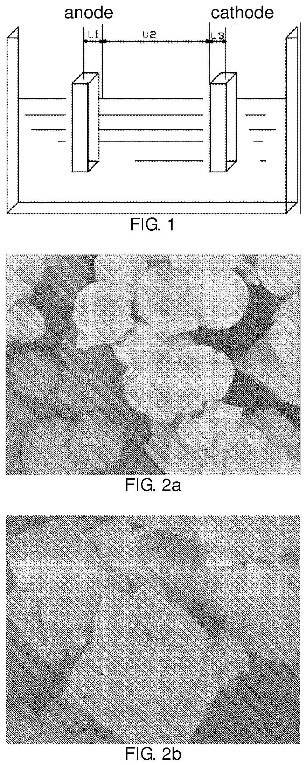

The voltage applied between anode and cathode by the electrolysis system comprises three parts, as shown in FIG. 1, wherein:

U1: comprising electrode potential and polarization overpotential from anode oxidation; in case the polarization of electromechanical reaction can be ignored, U1 almost remains unchanged independently of the current density for specific reaction system (reaction concentration, pH and temperature unchanged);

U2: in case the voltage drop and solution conductivity caused by the solution resistance become lower, the resistance R can rise with the increase of current density;

U3: comprising electrode potential and polarization overpotential from cathode reduction; in case the polarization of reaction can be ignored, and the cathode isn't stained and covered by suspended and inorganic substances, U3 almost remains unchanged independently of the current density for specific reaction system (reaction concentration, pH and temperature unchanged).

The electrolysis current I is required to be maintained over a certain constant value in order to guarantee the sterilization and algae removal capacity of the system; in case the electrode spacing is d (no design is considered to change the electrode spacing for all publicly available electrolysis systems), the electrolysis area is S, and conductivity of water bodies is $\mu$, with a relationship below:

$$U2 = IR = I \times \left( {}^{d}\!/(S \times \mu) \right) \qquad (1)$$

I, d and S are determined for certain electrolysis system, but different types of water bodies have different conductivities, i.e. 30000$\mu$S/cm for seawater system, and 50-500$\mu$S/cm for estuary water bodies. At estuary, although influenced by ocean tide, the chemical composition of water at the convergence area during ebb is similar to river systems since water flow direction towards the ocean is one-way; the water at the convergence area becomes very complicated and unstable during slack tide; flood tide has great influence on the estuary with seawater traced far into estuary, so the chemical composition at the convergence area is similar to the characteristics of seawater. Thus, at least a 60 times difference with seawater exists when the conductivity of estuary water is 50-500$\mu$S/cm. Eq. (1) shows that, voltage U2 applied between anode and cathode has at least 60 times difference, thus the electrolysis system within the safety voltage range almost cannot meet the requirements of ships for treatment of ballast water in different water regions.

(2) Scaling at cathode exists in fresh water system, leading to sharp increase of resistance between cathode and water bodies against the electrolysis efficiency; in case the constant-current is to be guaranteed, the overall electrolysis voltage will rise sharply, resulting in abnormal system operation.

Scaling of $CaCO_3$ at cathode mainly occurs during electrolysis in the fresh water system. Since numerous positive ions are absorbed on the cathode surface and surrounding region to meet the electric load balance, the concentration of positive ions in the water bodies differ less; $Ca^{2+}$ electric load is higher, and concentrated on the cathode surface and surrounding region, so the following reaction occurs between the region and $HCO_3^-$:

$$Ca^{2+} + HCO_3^- = CaCO_{3(s)} + H^+ \qquad (2)$$

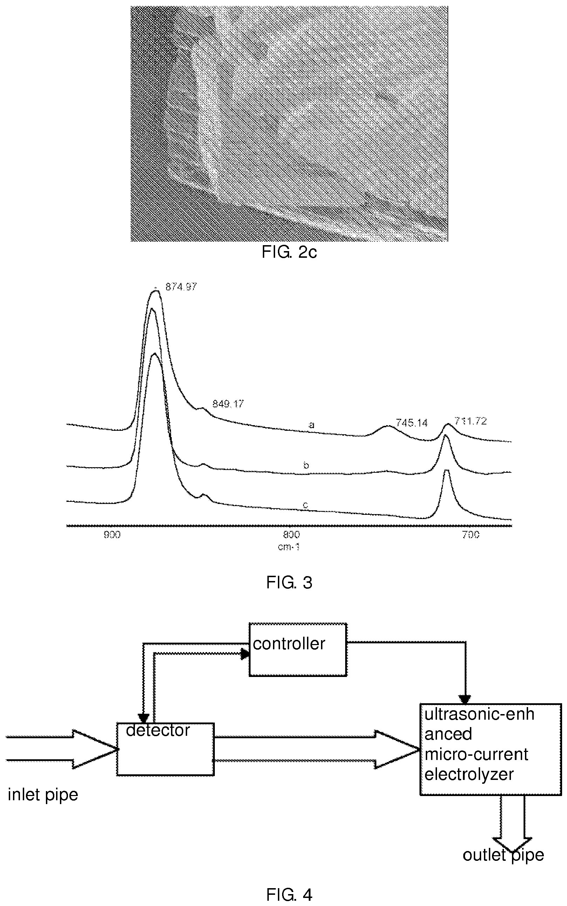

According to the research of Jeffrey A. Franz about the influences of pollution of electrode surface caused by cathode sediment/scaling during electrolytic oxygen generation on aerobe degradation system (Water Research, Vol. 36, Issue 9, May 2002, Pages 2243-2254), the major sediment on the cathode surface is $CaCO_3$. Patent No. CN1999253589 discloses a water tank self-cleaning sterilizer, the cathode has obvious $CaCO_3$ sediment during long-running, and in case using with hard water, $CaCO_3$ sediment generated from reaction (2) can lead to congestion of electrolysis pipe; patent application No. 03156596. 4 discloses a "combined micro-current electrolytic water treatment technology and device", whereby the scaling problems can be alleviated during cleaning of electrode surface by ultrasonic probe, but the impact on aquatic ecosystem is adverse, and slight scaling still occurs on the cathode surface during long-running; although the device can efficiently control and inhibit the blue algae in large eutrophic water bodies, the multiple groups of parallel electrodes can lead to difficult rotation of the installed platforms (ships and can buoys) during shift; moreover, aquatic animals (fish) entering the space between the electrodes can be exposed to electric shock, thus forming short circuit; the device is fixed into the water tanks for electrolytic sterilization of sea farming water at a flow rate of 1.0-1.5m/s, and a small amount of white sediment is generated at the bottom of the tank (bottom of tank is 2cm away from the edge of electrode) after long-running process (at least 3 months), but the cathode surface isn't covered by the sediment. The "blue algae treatment device" published in China patent application No. 200520114686. 3 also faces similar problem of sediment and scaling of $CaCO_3$. $CaCO_3$ is available with three crystal forms: calcite, aragonite and vaterite. Calcite can form a compact structure easily that's not easily shedding off; aragonite is generally crystallized and formed on the template or at high temperature (over 80°C), other than during the electrolysis process; vaterite shed off easily due to a loose structure. By scraping separately white sediments from the combined micro-current electrolytic water treatment device in sea farming sterilization environment, white scales on the cathode surface of the combined micro-current electrolytic water treatment device for fresh water treatment, and white scales of water tank self-cleaning sterilizer in high-rise buildings, SEM pictures and IR absorption analysis are conducted with the results shown in FIG. 2a, 2b, 2c and FIG. 3, wherein, curve a in FIG. 3 depicts a seawater absorption analytical curve, curve b depicts a fresh water absorption analytical curve, and curve c depicts a tap water absorption analytical curve.

FIG. 2a shows that, the white sediment particles from sea farming electrolysis treatment system are relatively small, and most particles are spherical; FIG. 2b and 2c separately depicts SEM pictures of the large particles of white sediments on the cathode surface from fresh water farming electrolysis system and water tanks in high-rise buildings; in FIG. 3--IR absorption spectrum, curve a depicts an IR absorption spectrum of white sediment particles from seawater farming electrolysis system, which comprises the characteristic absorption band 745 $cm^1$ of vaterite in addition to carbonate internal bending vibration v4 characteristic absorption peak 712 $cm^1$ and carbonate external bending vibration v2 characteristic absorption peak 875 $cm^1$ of calcite; curve a differs significantly from IR absorption spectrums b and c of white sediments on the cathode surface from fresh water farming electrolysis system and water tanks in high-rise buildings; b and c are very similar as a typical IR absorption spectrum of calcite, in agreement with the analytical results of SEM.

In order to resolve the cathode scaling problem during electrolysis process, China patent application No.200620032114 discloses a pole-reversing electrochemical reactor that enables shedding off of cathode scaling via pole-reversing; but the method brings about a new problem, i.e. frequent pole-reversing descaling makes the loss of catalytic activity for the anode of electrolysis device, leading to higher overpotential of electrode and decline of current efficiency.

At present, the water treatment system with electrolytic oxidative substances generally adopts DSA (Dimensional Stable Anode) with catalytic activity, which is an electrode material made of metallic titanium or titanium alloy as the substrate and coated with platinum family oxide invented by Dutch Henri Bernard Beer (1909-1994). According to H. Beer 65 patent, titanium or titanium alloy is taken as the core or substrate, and a platinum metal or alloy oxide is selected from platinum, iridium, rhodium, palladium, ruthenium and osmium, especially an oxide comprising at least one non-platinum metal (e.g. Ta, Ti), to form the external electrode; in 1968, De Nora (Italy) and Diamond Shamrock (U.S.A) successfully applied the invention of Beer into chlor-alkali production. The anode for salt electrolysis developed titanium-based platinum metal oxide electrode, which presents higher catalytic activity and can be used over 15 years. DSA has already a history over 40 years since late-60s of 20th century. As pointed out by Zhang Zhaoxian in "Coated electrode with a history of 40 years" (Electroplating & Finishing, No. 1, vol. 26, 2007), titanium anode has strongly driven the development of salt electrolysis production, and is reputed as a technical renovation in chlor-alkali industry. The invention of DSA is one of the most important inventions in electrochemical industry in 20th century, presenting an epoch-making contribution to electrochemical industry. In case the electrode is used as a cathode, $H_2$ generated by cathode reaction can be absorbed by strong nitrogen absorption materials, such as Pt, Ir, Ru, Rh, Pd and Ti, leading to volume expansion and peeling of the coatings and core materials as well as shedding of coatings and active substances and loss of catalytic activity.

Owing to the aforementioned shortcomings of large-area eutrophic and high-flux ballast water treatment technology, e.g.: inefficiency of killing bacteria and blue algae, high operating cost and secondary pollution, the technology isn't suitable for both fresh water and seawater systems.

WO9400860A1 discloses an electrolytic filter system for use in treating fluid provided by a fluid source to a supplied environment. The system includes an electrolytic cell controlled by control circuit. Various alternative constructions of the cell are described in which the effective separation of active electrodes, as well as the effective area of the active electrodes can be altered by a switching circuit and controller included in the control circuit. The controller responds to inputs from a current sensor reflecting variations in the resistivity of the water. As a result, the controller is able to alter the effective separation and area of the active electrode, in response to resistivity variations to provide optimal operation.

Therefore, a micro-current electrolysis sterilization algaecide device is required to resolve the aforementioned problems of the prior arts.

**SUMMARY OF THE INVENTION:**

The invention relates to a micro-current electrolysis sterilization algaecide device intended to be operated for electrolysis of either seawater bodies or fresh water bodies, comprising:

- a tank having an inlet pipe and an outlet pipe;

- a solution conductivity detector arranged in the inlet pipe;

- an ultrasonic-enhanced micro-current generator comprising:

    ◦ a DC electrolysis power supply;

    ◦ an electrolysis electrode group, said electrolysis electrode group comprising electrodes equidistantly arranged in the tank with the order of an auxiliary electrode between an anode and a cathode, the electrodes in the electrode group being tubular electrodes or sheet electrodes, in the case the electrodes in the electrode group are tubular electrodes, the tubular electrodes being further arranged coaxially along the radial direction;

    ◦ a plurality of electrode lead connectors;

    ◦ an ultrasonic generator; and

    ◦ an ultrasonic reflector,
    said ultrasonic generator and said ultrasonic reflector being arranged at both ends of the tank, said ultrasonic generator comprising at least an ultrasonic energy converter; the group of electrodes being positioned between the ultrasonic generator and the ultrasonic reflector,

- a controller comprising:

    ◦ a judging unit;

    ◦ an electrolysis-model unit which is avalaible in three types:

        ▪ a seawater electrolysis-model unit, configured to control the auxiliary electrode in an inactive state, through electrolysis between the anode and the cathode after receiving trigger signals;

        ▪ a fresh water electrolysis-model unit, configured to, after receiving trigger signals, control the auxiliary electrode being taken as cathode, the cathode - so-called original cathode - being taken as anode, and the attribute of the anode - so-called original anode, remaining unchanged, and the corresponding electrode spacing is shortened to ½ of the so-called original spacing used in the seawater mode; and

        ▪ a pole-reversing electrolysis model unit,

    said judging unit being configured to, based on the conductivity value detected by the conductivity detector, trigger the corresponding seawater electrolysis-model unit, fresh water electrolysis-model unit and pole-reversing electrolysis-model unit, according to a conductivity value of above or below 1500 nS/cm;
when the conductivity value is above 1500 nS/cm, triggering the seawater electrolysis-model unit, or
when the conductivity value is below 1500 nS/cm, triggering the fresh water electrolysis-model unit, and
when the fresh water electrolysis-model is used and that the electrolysis potential rises by 20% under the same current condition, indicating that cathode scaling occurs during electrolysis process; and when the electrolysis potential (U1 + U2 + U3) rises by 20 % under the same electrolysis current and in the same fresh water body, the pole-reversing electrolysis-model unit with the current density not bigger than 20mA/cm2 and pole-reversing electrolysis time not more than 1h,

U1 comprising the electrode potential and polarization overpotential from anode oxidation;

U2 being defined by the following formula:
U2 = IR = I x ($^{d}$/S x $\mu$); where I is the electrolysis current, R is the solution resistance, d is the electrode spacing, S is the electrolysis area and $\mu$ is the conductivity of water bodies; and

U3 comprising electrode potential and polarization overpotential from cathode oxidation,

the pole-reversing electrolysis consisting in:

- changing the polarity of the so-called orignial cathode, functioning as an anode in the fresh water electrolysis-model unit, into cathode;

- changing the polarity of auxiliary electrode into anode; and

disabling the so-called original anodeIn certain preferred embodiments of the invention, in case the electrode is a sheet electrode, the shape of ultrasonic reflector is triangular prism or circular arc, with the edge of the prism or arc protruding towards the ultrasonic generator;
In case the electrode is a tubular electrode, the shape of ultrasonic reflector is conical, with the tip of the cone facing the ultrasonic generator.

In certain preferred embodiments of the invention, in case the electrode is a tubular electrode, the electrodes and ultrasonic energy converters are arranged concentrically.

In certain preferred embodiments of the invention, the detector is an inductive conductivity sensor or a conductivity transducer.

In certain preferred embodiments of the invention, the anode takes either metallic titanium or titanium alloy as the substrate, onto which oxide comprising at least either of Pt, Ir, Ru, Rh, Pd or Os, as well as oxide comprising at least Ta or Ti, are coated to form DSA.

In certain preferred embodiments of the invention, the auxiliary electrode and cathode are made preferably of either metallic titanium or titanium alloy; the ultrasonic reflector is made of materials comprising at least plastics, metallic titanium, titanium alloy, stainless steel, carbon steel or copper alloy.

In certain preferred embodiments of the invention, the micro-current electrolysis sterilization algaecide device also comprises potentiometer or residual chlorine electrode and residual chlorine transducer arranged on the outlet pipe of the tank for detecting the chlorinity in the electrolyzed solution; the electrolysis units are used to adjust the electrolyzed current and voltage according to the chlorinity.

The other purpose of the invention is to provide the micro-current electrolysis sterilization algaecide device for sterilization algaecide in water bodies. In certain cases, the water body refers to seawater or fresh water.

The invention also provides a sterilization algaecide method for water bodies using micro-current electrolysis sterilization algaecide device as previously defined, comprising:

1) Detecting the conductivity of the water body;

2) Sending the conductivity value to the judging unit;

3) Judging the conductivity value;

4) When the conductivity value is above 1500 nS/cm, triggering the seawater electrolysis-model unit, or
when the conductivity value is below 1500 nS/cm, triggering the fresh water electrolysis-model unit, and

when the fresh water electrolysis-model is used and that the electrolysis potential rises by 20% under the same current condition, indicating that cathode scaling occurs during electrolysis process; and when the electrolysis potential (U1 + U2 + U3) rises by 20 % under the same electrolysis current and in the same fresh water body, triggering the pole-reversing electrolysis-model unit with the current density not bigger than 20mA/cm2 and pole-reversing electrolysis time not more than 1 h,

U1 comprising the electrode potential and polarization overpotential from anode oxidation;

U2 being defined by the following formula:
U2 = IR = I x ($^d$/S x $\mu$); where I is the electrolysis current, R is the solution resistance, d is the electrode spacing, S is the electrolysis area and $\mu$ is the conductivity of water bodies; and

U3 comprising electrode potential and polarization overpotential from cathode oxidation.

In certain preferred embodiments of the invention, wherein, when the pole-reversing model unit is operated, in case the operating frequency and operating hour of the device exceed the threshold, the polarity of the auxiliary electrode is converted into anode, the circuit connections of anode converted from the auxiliary electrode and cathode without change of polarity are conducted, and the circuit connections of anode without change of polarity are shut off.

In certain preferred embodiments of the invention, wherein, the water body refers to any suitable water body, e.g. seawater or fresh water.

In certain preferred embodiments of the invention, the method also comprises application of ultrasonic wave to at least some water bodies.

In certain preferred embodiments of the invention, the method also comprises detection of chlorinity in the electrolyzed water bodies, as well as adjustment of the electrolyzed current and voltage according to the chlorinity.

The device and method of the invention can be applied to sterilization algaecide in seawater or fresh water; by adding an ultrasonic generator, the cells of a variety of bacteria and algae can be destroyed effectively. The device has the advantages of good bactericidal algaecide effect, automatic scaling, wide range of applications and simple structure.

## BRIEF DESCRIPTION OF THE FIGURES

FIG. 1: a schematic view of the electrolysis system;

FIG. 2a: a schematic view of white sediment particles from sea farming electrolysis treatment system;

FIG. 2b: a scaling view of cathode surface from fresh water farming electrolysis treatment system;

FIG. 2c: a schematic view of white scales on cathode surface from self-cleaning sterilizer for the water tanks of high-rise buildings;

FIG. 3: a curve diagram of IR absorption spectrum from different water bodies;

FIG. 4: a schematic view of micro-current electrolysis sterilization algaecide device;

FIG. 5a: a schematic view of sheet titanium anode of electrode groups for micro-current electrolyzer;

FIG. 5b: a schematic view of sheet titanium cathode of electrode groups for micro-current electrolyzer;

FIG. 5c: a schematic of flat auxiliary electrode of electrode groups for micro-current electrolyzer;

FIG. 6: a configuration view of sheet electrode groups for micro-current electrolyzer;

FIG. 7A: a structural view of fixed support of plastic electrode;

FIG. 7B: a partially enlarged view of FIG. 7A;

FIG. 7C: a sectional view of direction B-B in FIG. 7B;

FIG. 8: a structural view of controller in the device;

FIG. 9A: a schematic view of the transmission direction of ultrasonic wave transmitted by the ultrasonic energy converter;

FIG. 9B: a schematic view of the transmission direction of ultrasonic wave reflected by the ultrasonic reflector;

FIG. 10: a schematic view of tank-type micro-current electrolysis sterilization algaecide device;

FIG. 11: a schematic view of direction A-A in FIG. 9;

FIG. 12A: a structural view of 800mm x 500mm titanium anode ($\delta$=2.0mm);

FIG. 12B: a structural view of 800mm x 500mm titanium cathode ($\delta$=2.0mm);

FIG. 12C: a structural view of 800mm x 500mm titanium auxiliary electrode ($\delta$=1. 3mm);

FIG. 13: a control principle diagram of the micro-current electrolysis sterilization algaecide device;

FIG. 14: a configuration view of electrodes of tank-type micro-current electrolysis sterilization algaecide device;

FIG. 15: a schematic view of direction B in FIG. 9;

FIG. 16: a configuration view of electrode terminal outlet of sealed electrode gasket assembly of tank-type micro-current electrolysis sterilization algaecide device;

FIG. 17: an electrode wiring diagram of sealed electrode cover plate of tank-type micro-current electrolysis sterilization algaecide device;

FIG. 18A: a front view of wiring terminal;

FIG. 18B: a left view of wiring terminal;

FIG. 19: a configuration view of triangular prism;

FIG. 20: a configuration view of ultrasonic generator of tank-type micro-current electrolysis sterilization algaecide device;

FIG. 21: a structural view of sealing gasket for connection of ultrasonic generator, tank and cover plate of ultrasonic generator;

FIG. 22: a schematic view of direction C in FIG. 9;

FIG. 23A: a structural view of ultrasonic-enhanced micro-current electrolysis system of tank-type micro-current electrolysis sterilization algaecide device;

FIG. 23B: a partially enlarged view of FIG. 23A;

FIG. 24: a structural view of plastic flange for fixing the rod-shaped titanium anode, comprising electrode lead;

FIG. 25: a structural view of plastic flange for fixing the rod-shaped titanium anode, not comprising electrode lead;

FIG. 26: a structural view of plastic flange for fixing the porous tubular auxiliary electrode, comprising electrode lead;

FIG. 27: a structural view of plastic flange for fixing the porous tubular auxiliary electrode, not comprising electrode lead.

EP 2 269 956 B1

DETAILED DESCRIPTION OF THE INVENTION

The features and advantages of the invention can be more readily understood upon a thoughtful deliberation of the following detailed description of the preferred embodiments of the invention with reference to the accompanying figures, which, however, are only for explanation and not for restriction of the invention.

For the operating principle of preferred embodiment 1 of the invention, refer to FIG. 4, which comprises: the detector used for detecting the conductivity in the inlet pipe, and the controller used for judging the conductivity detected by the detector, and control the ultrasonic-enhanced micro-current generator to work in corresponding modes against differentconductivity .

The detector can employ a conductivity sensor or a conductivity gauge. The conductivity sensor is an induction type conductivity sensor. The operating principle is that an induction current is generated in a closed loop of solution, and the conductivity of the solution is obtained by measuring the current. Thanks to strong resistance to pollution, the sensor can ensure the system works stably in complicated water environment. The conductivity gauge and potentiometer employ separately the conductivity transducer and residual chlorine transducer for easy industrial control.

Ultrasonic-enhanced micro-current generator comprises a DC electrolysis power supply, an electrolysis electrode group, a tank, a plurality of electrode lead connectors, an ultrasonic generator and an ultrasonic reflector.

The DC power supply is a linear DC, with an 110V or 220V AC input and an DC output, and the electrolysis current can be adjusted where necessary, with the output voltage controlled within 36V; the electrode group comprises a plurality of coated electrodes arranged equidistantly based on metallic titanium and titanium alloy; the tank comprises a housing, a seal, a fitting and a connection flange, wherein, the housing and flange are made of plastics; the ultrasonic generator comprises a housing, an energy converter and a power supply ultrasonic generator.

In the micro-current electrolyzer, the electrolysis electrode group can realize sterilization and algae removal, and where applicable, the ultrasonic generator can be added to destroy the bacteria and algae cells.

In certain preferred embodiments, the electrode group of ultrasonic-enhanced micro-current generator mainly comprises:

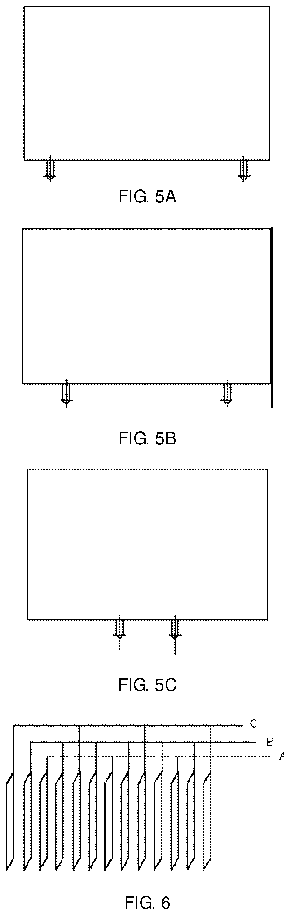

(1) Anode: taking either metallic titanium or titanium alloy as the substrate, onto which at least either of Pt, Ir, Ru, Rh, Pd, Os or oxide comprising Pt, Ir, Ru, Rh, Pd, Os, as well as oxide comprising at least Ta or Ti, are coated to form anode--titanium anode (DSA). Pt, Ir, Ru, Rh, Pd, 0s, Ta and Ti can provide catalytic activity center of d and f unoccupied orbit for electrical transfer, so as to prevent polarization and facilitate the generation of highly active oxidative substances; in order to prevent the burn-out of the contact between electrode and lead due to excessive current, at least 2 wiring terminals are uniformly distributed on the sheet anode; for the details, refer to the structural view of titanium anode in FIG. 5a, wherein a through-hole is positioned on the wiring terminal, and can be connected with electrical wire and fixed by screws; the tubular anode permits to resolve the excessively big local current at the contact via a circular contact.

(2) Cathode: taking either metallic titanium or titanium alloy as the substrate, onto which oxide comprising at least either of Ta or Ti is coated; the cathode is ensured to have certain catalytic activity when converted into anode in the fresh water system of lower conductivity; meanwhile, the oxide of Ta and Ti has a low hydrogen-absorption capability, and cannot shed off when used as cathode; similarly, at least 2 wiring terminals are uniformly distributed on the sheet cathode in order to prevent the burn-out of the contact between electrode and lead due to excessive current; for the details, refer to the structural view of cathode in FIG. 5b, wherein a through-hole is positioned on the wiring terminal, and can be connected with electrical wire and fixed by screws; the tubular cathode permits to resolve the excessively big local current at the contact via a circular contact.

(3) Auxiliary electrode: taking metallic titanium or titanium alloy screen with average aperture not less than 3mm, onto which oxide comprising at least Ta or Ti is coated to form the external layer, so as to guarantee the electrode isn't corroded when pole-reversing scaling electrode is used as anode; similarly, at least 2 wiring terminals are uniformly distributed onto the sheet auxiliary electrode in order to prevent the burn-out of the contact between electrode and lead due to excessive current; for the details, refer to the structural view of auxiliary electrode in FIG. 5c, wherein a through-hole is positioned on the wiring terminal, and can be connected with electrical wire and fixed by screws; the tubular auxiliary electrode permits to resolve the excessively big local current at the contact via a circular contact.

For the sheet titanium anode, cathode and auxiliary electrode, 2 or 3 wiring terminals are preferred in case the electrode isn't longer than 1200mm, since excessive wiring terminals affects the sealing and appearance of the system.

Sheet electrodes can be adopted in the electrode group, and arranged equidistantly in accordance with the order of auxiliary electrode between cathode and anode, so as to form the electrode group of micro-current electrolysis system; for the arrangement of electrode group comprising sheet electrodes, refer to FIG. 6, wherein all electrodes are coated

12

in double surfaces; owing to relatively high construction cost of anode, the final group can be arranged in the manner that mark A is anode, mark C is cathode, and mark B is auxiliary electrode, and cathode C is located at the outermost layer to ensure the space availability and lower cost of the device.

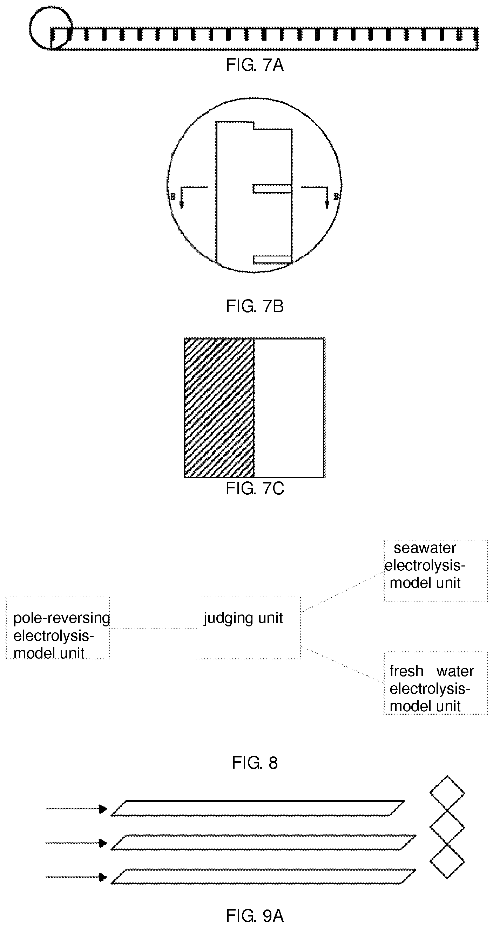

A plurality of plastic supports are adopted in certain preferred embodiments, for the details, refer to enlarged views in FIGS. 7A, 7B and 7C, wherein, FIG. 7B is an enlarged view of FIG. 7A, and FIG. 7C is sectional view of direction B-B in FIG. 7B. The electrodes are fixed by the plastic supports.

Given different conductivity values of seawater and fresh water, the controller In certain preferred embodiments is allowed to select different electrolysis models based on the conductivity values, so as to control different electrodes in ultrasonic-enhanced micro-current generator; refer to FIG.8--a schematic view of controller, which comprises a judging unit and an electrolysis-model unit, wherein, the electrolysis-model unit is available in three types: seawater electrolysis-model unit, fresh water electrolysis-model unit and pole-reversing electrolysis-model unit.

When the judging unit judges that the conductivity detected by the detector is bigger than 1500nS/cm seawater, the seawater electrolysis-model unit is triggered to control the auxiliary electrode B in an inactive state; through electrolysis between anode A and cathode C, the chlorine ions and water molecules in the processed water bodies are electrolyzed into highly active substances (CIO-, 0H, $H_20_2$, (0)), allowing for oxidation of RNA and DNA of the bacteria and algae cells to make them inactive and dead for the purpose of sterilization and algae removal in a continuous manner; due to the combined action of numerous through-holes in auxiliary electrode B and the ultrasonic wave, the dispersion and oxidation sterilization effect of electrolyzed active substances cannot be affected by the auxiliary electrode B;

When the judging unit judges that the conductivity detected by the detector is smaller than 1500nS/cm fresh water, the fresh water electrolysis-model unit is triggered to control auxiliary electrode B to work as cathode; original cathode C is taken as anode, and the attribute of original anode A remains unchanged, and the corresponding electrode spacing is shortened to original 1/2. According to Eq. (1), electrolysis of fresh water of lower conductivity can reduce the working voltage significantly;

In case auxiliary electrode B works for a longer time in water bodies of higher hardness, calcium carbonate is deposited on the surface; when the operating frequency and operating hours reach a certain threshold, the pole-reversing electrolysis-model unit enables pole-reversing electrolysis by changing the polarity of original cathode C (one of anodes when fresh water system is working) and auxiliary electrode B; the pole-reversing electrolysis-model unit changes the auxiliary electrode B into anode, and original cathode C (anode when fresh water system is working) into cathode again for electrolysis descaling; during the process of pole-reversing descaling, original anode A is disabled, helping to protect efficiently the catalytic activity of anode A and ensure the long-term stability and reliability of the device.

In certain preferred embodiments, according to the long-running operating rule, constant-current electrolysis is implemented in case the water tank is operated in the same fresh water bodies; the electrolysis potential rises by 20% under the same current condition, indicating that cathode scaling surely occurs during electrolysis process; and when the electrolysis potential (U1 + U2 + U3) rises by 20% under the same electrolysis current and in the same fresh water bodies, pole-reversing electrolysis model is used for descaling, with the current density not bigger than 20mA/cm2, and pole-reversing electrolysis time not more than 1h; no pole-reversing electrolysis is required for descaling in the seawater system.

When the electrode group adopts tubular electrodes: the auxiliary electrodes are positioned between cathode and anode in the same order, and arranged equidistantly and coaxially along radial direction, and fixed by plastic flange with not more than 6 uniformly arranged support rods to reduce the water resistance.

The device also comprises an ultrasonic generator and an ultrasonic reflector for destroying the bacteria and algae cells. The ultrasonic generator comprises a housing, a plurality of energy converters and a power supply; a plurality of ultrasonic energy converter arrays are uniformly arranged in the housing, and uniformly positioned in parallel with the sheet electrode group to enhance the strength of ultrasonic wave and guarantee the uniform distribution of the treatment device's ultrasonic field in the water body; a circular uniform arrangement is preferred for the micro-current electrolysis system of tubular electrode group.

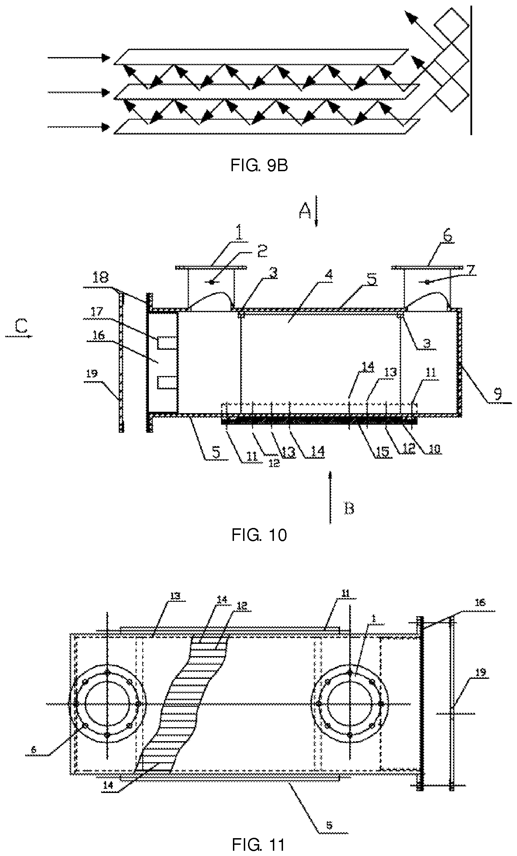

During transmission of ultrasonic wave generated by the ultrasonic generator, (referring to FIG. 9A and FIG. 9B), in case a plane perpendicular to the forward direction is encountered, a huge amount of energy can be reflected back the same way despite of divergence; the reflecting plane or curved face made by the ultrasonic reflector forms a certain angle with the movement direction of the ultrasonic wave, thereby changing the reflecting direction of the ultrasonic wave, enhancing the cleaning of electrode and reducing the scaling phenomenon; on the other hand, the transmission distance of ultrasonic wave in the water body specific to the treatment device is increased, expanding the opportunity of destroying the bacteria and micro-organism cells with ultrasonic wave, as well as avoiding reflection of ultrasonic wave the same way, so as to prevent damage of the ultrasonic energy converter's piezoelectric vibrator and extend the service life.

In certain preferred embodiments, the ultrasonic reflector is made of plastics, metallic titanium, titanium alloy, stainless steel, carbon steel or copper alloy, and metallic titanium, titanium alloy and plastics are preferred options in order to prevent the corrosion of materials during system operation.

The ultrasonic reflector is either of a triangular prism or semicylinder; one cylindrical surface of triangular prism is mated with the tank and kept in parallel with the electrode, with one edge running perpendicular to the transmission direction of the ultrasonic wave transmitted by the ultrasonic generator; in case of a semicylinder, the cylindrical plane is mated with the tank, and kept in parallel with the electrolysis electrode, with the curved face running perpendicular to the transmission direction of the ultrasonic wave transmitted by the ultrasonic generator; thus the reflecting direction of ultrasonic wave can be changed effectively, the cleaning of electrode can be enhanced and the scaling phenomenon can be reduced, meanwhile the capability of ultrasonically destroying bacteria and micro-organism cell walls is promoted; triangular prism structure is a preferred option to improve the distribution uniformity of high-ultrasonic field. A tapered ultrasonic reflector is perfectly suitable for tubular electrode system.

In certain preferred embodiments, the device employs a sheet electrode, with the structural view shown in FIG. 10, wherein a tank-type ultrasonic enhanced micro-current electrolysis sterilization algaecide device is connected with an inlet flange 1; an induction conductivity sensor 2 is arranged in the inlet pipe; a sheet electrode group 4 is arranged in the tank-type housing 5 of the device; a plastic electrode support 3 for fixing the sheet electrode is arranged in the sheet electrode group 4; the tank-type housing 5 is connected with an outlet flange 6, while a residual chlorine electrode 7 and a residual chlorine transducer are arranged on the outlet pipe; an ultrasonic reflector 9 is arranged in the device, an electrode group rubber gasket 10 is arranged outside the sheet electrode group 4, and fixed on the tank-type housing 5 via a cover plate 15, and then fastened by a fastener 11; a titanium anode 12, a cathode 13 and a titanium auxiliary electrode 14 are arranged on the plastic electrode support 3; one end of the device is provided with an ultrasonic generator housing 16, into which an ultrasonic energy converter 17 is arranged; a rubber gasket 18 is connected between the ultrasonic generator housing 16 and the tank, and fixed by the ultrasonic generator's cover plate 19.

InPro7250HT induction conductivity sensor 2 made of PEEK and Mettler-Toledo transducer form the conductivity detection and signal transmission parts of incoming water body, with the signal output connected with the controller; SZ283 residual chlorine electrode 7 and Italian B&C (CL3630 residual chlorine transducer) form the residual chlorine detection and signal transmission parts, with the signal output connected with the controller.

In certain preferred embodiments, the device is preferably made of 15mm U-PVC plates. A tank-type housing 5 with net size of 1580mm x 600mm x 515mm is a preferred option; the inlet connection flange 2 and outlet connection flange 6 are preferably sized by external diameter of 350mm and internal diameter of 200mm; 8 bolt holes of 22mm are uniformly distributed on a 295mm circle, and connected separately with the inlet and outlet pipes via a plurality of M20 fastening bolts, as shown in FIG. 11--a schematic view of direction A in FIG. 9.

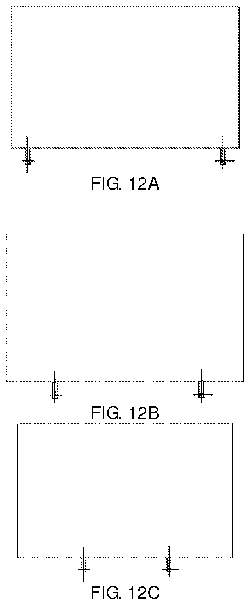

The sheet electrode group 4 is preferably sized by 800mm in length, 500mm in width and $\delta$2. 5mm in thickness, and coated with Ir and Rh oxides as well as Ti02 titanium anode 12; an electrode of 800mm in length, 500mm in width and $\delta$2.5mm in thickness, with the core as metallic titanium and coated with Ta and Ti oxides, is taken preferably as the cathode 13; a titanium electrode of 800mm in length, 500mm in width and $\delta$I.3mm in thickness, with the core as metallic titanium, mesh opening (central distance) of 4.5mm x I2.5mm, and coated with Ta and Ti oxides, is taken as the auxiliary electrode 14; all electrodes are fitted with two wiring terminals, as shown in FIGS. 12A - 12C.

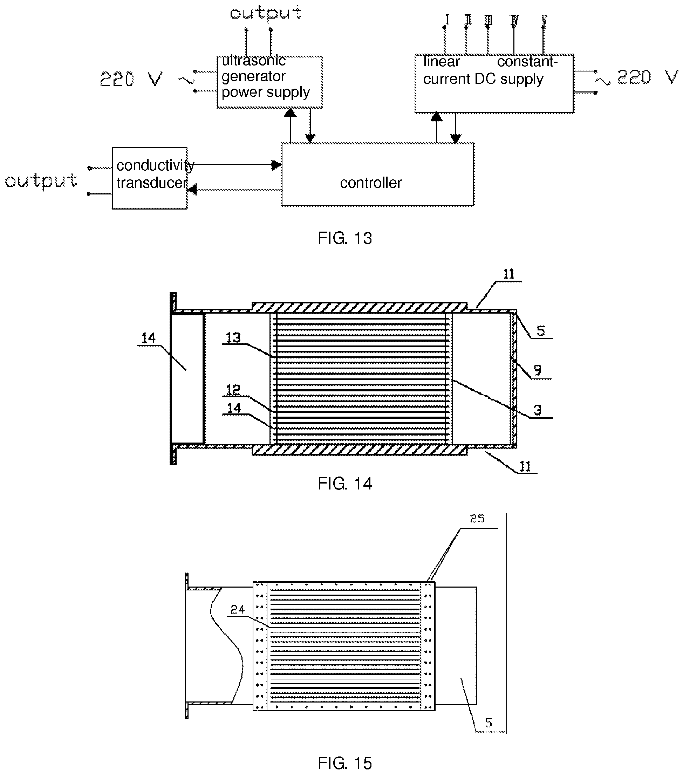

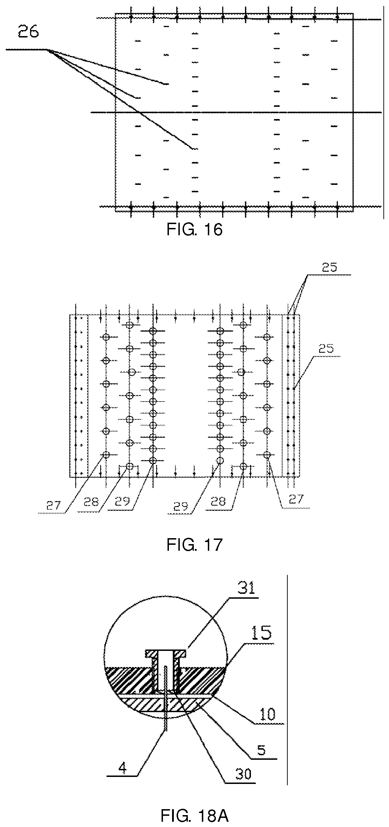

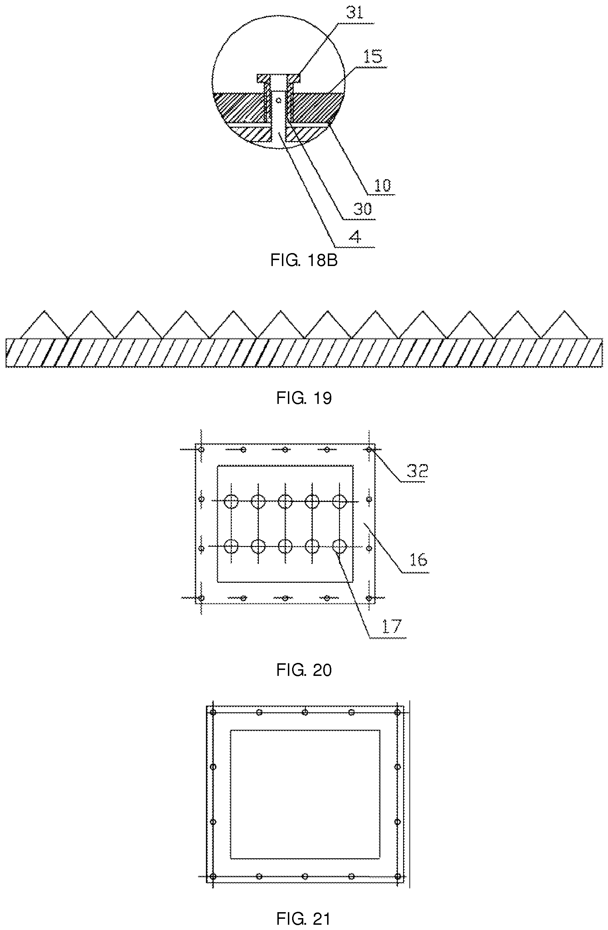

6 anodes, 7 cathodes and 12 meshy auxiliary electrodes are arranged equidistantly on the plastic support 3 at a central spacing of 25mm according to the order of cathode, auxiliary electrode and anode; the fixed round groove of the support is 15mm away from the tank bottom, so as to ensure that less water sediments occurred during operation cannot lead to short circuits of electrodes, as shown in FIG. 7 and FIG. 14; as the clear height of the tank is 500mm, 15mm of sheet electrode is fully kept in the plate of the tank (thickness of plate: 15mm) to ensure accurate positioning of the electrodes, and prevent disturbance and shift under the running water; the electrode is inserted into the tank from the installation groove of the tank, and the plastic support 3 is embedded from both ends at the other side, with the installation groove of 803mmx3mm for easier installation and positioning as shown in FIG. 15; a rubber gasket 10 of 5mm is added between the installation groove and the sealed electrode cover plate 15, and fixed by a M8 bolt via a $\Phi$10mm through-hole 25; a plurality of openings are cut on the rubber gasket correspondingly to the electrode's wiring terminals, and taken as the electrode wiring terminal outlet 26 of sealed electrode rubber gasket, enabling the electrode wiring terminals to pass through while ensuring the sealing effect, as shown in FIG. 16 and FIG. 17; every electrode wiring terminal is fastened and sealed by a stainless steel presser 30 of 4mm (thickness) and 25mm (external diameter) with a central through-hole of 17mmx3mm, and a M30 bolt 31 of central aperture of 18mm and 50mm in height; the electrical wire are connected with the electrode through the bolt hole of the electrode wiring terminal with screw, and the electrode wiring terminal, metal presser 30 and the hollow fastening bolt 31 form the wiring terminal as shown in FIG. 18A and FIG. 18B.

The electrodes in the sheet electrode group 4 are connected with the linear constant-current DC supply, as shown in FIG. 13, wherein, the linear constant-current power output terminals I, iii and v are anode output terminals, while ii and iv are cathode output terminals; the cathode 13 is connected separately with the output terminals ii and iii of the linear constant-current DC supply through the wiring terminal 28; the auxiliary electrode 14 is connected separately with the output terminals iv and V of the linear constant-current DC supply through the wiring terminal 29; the output terminals I, iii and v of the linear constant-current DC supply are anode output terminals, while ii and iv are cathode output terminals. In certain preferred embodiments, in case electrolysis of seawater system is underway (conductivity bigger than 1500nS/cm), the controller is connected with the I and ii output terminals of the linear constant-current DC supply; in case electrolysis of fresh water system is underway (conductivity smaller than 1500nS/cm), the controller is connected with the i, iii and iv output terminals of the linear constant-current DC supply; in case pole-reversing descaling is underway, the controller is connected with the ii and V output terminals of the linear constant-current DC supply; the device can be operated stably and reliably in fresh water and seawater bodies.

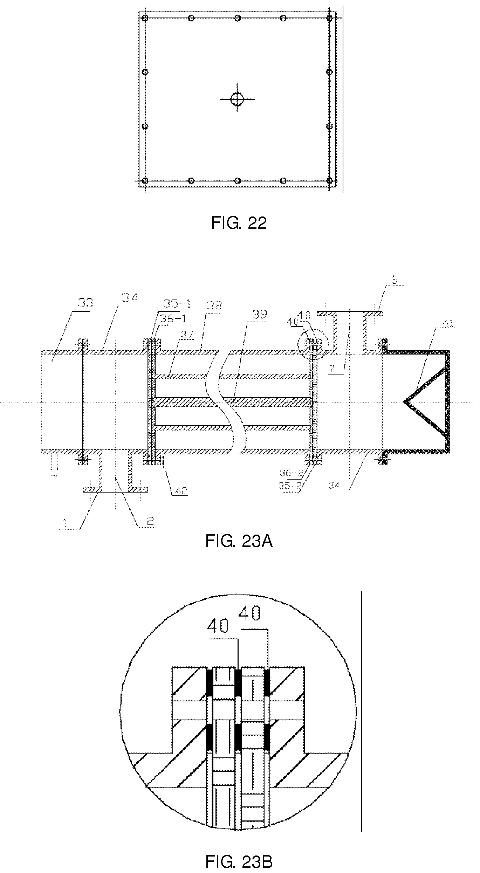

The ultrasonic reflector 9 adopts PVC to fabricate into a triangular prism of 50mm at the bottom, 15mm in height and 515mm in length; 12 same triangular prisms are arranged in parallel with the electrode, and welded onto the tank-type housing 5, as shown in FIG. 9 and FIG. 19; 10 TYH-50-25 ultrasonic energy converters 17 of 50W and 25KHz are adhered by AB adhesive onto 2mm Crl8Ni9Ti stainless steel ultrasonic generator housing 16, and distributed uniformly, as shown in FIG. 9 and FIG. 20; a 3.5mm rubber gasket 18 is added separately between the tank-type housing 5, the ultrasonic generator housing 16 and the ultrasonic generator faceplate 19, as shown in FIG. 21, and fixed securely by a M20x60 bolt via the $\Phi$22mm through-hole 32 to ensure the sealing effect; the electrical wire of the ultrasonic energy converter 17 is guided from the central hole of the ultrasonic generator faceplate 19, as shown in FIG. 22, and then connected with the power supply 21 of the ultrasonic generator.

In certain preferred embodiments, the output terminal of the conductivity transducer is connected with the input terminal of the controller, and the output terminal of the controller connected with the power supply 21 and linear constant-current DC supply (a 0-30V/800A linear power supply) of the ultrasonic generator; the conductivity of the incoming water and the residual chlorine of discharged water are detected through the command of the controller, and the electrolysis units in the controller determine the electrolysis model according to the detected conductivity and also adjust the electrolysis current and voltage according to the residual chlorine; the voltage and current signals of the linear constant-current DC supply are transmitted to the controller, wherein, the pole-reversing electrolysis-model unit decides whether pole-reversing is required; the controller can also select the corresponding ultrasonic energy converter 17 to control the power of ultrasonic generator according to the preset power.

The detailed description of the device of sheet electrode group is given above, and the following is to give a detailed description of the micro-current electrolysis sterilization algaecide device of tubular electrode group.

Referring to FIG. 23A--a tubular micro-current electrolysis sterilization algaecide device, wherein, the main body comprises an inlet flange 1, an induction conductivity sensor 2, an outlet flange 6, a residual chlorine electrode 7, a residual chlorine transducer, an ultrasonic reflector, a conductivity transducer, an ultrasonic generator power supply, a linear constant-current DC supply, a controller, an ultrasonic generator 33, a tee 34 with flange, two plastic flanges 35-1, 35-2 for fixation of rod-shaped titanium anode, two plastic flanges 36-1, 36-2 for fixation of porous tubular auxiliary electrode, a porous tubular auxiliary electrode 37 coated with Ti02, a tubular cathode 38 coated with Ti02 as the water pipe, a rod-shaped titanium anode 39 comprising Pt and Ir oxides, a plurality of gaskets 40, a tapered stainless steel ultrasonic reflector 41, and a lead terminal 42 with metal gasket. The ultrasonic generator 33 and the ultrasonic reflector 41 are fastened with the electrode group through the plastic tee 34 by adding the rubber gasket 40; for the installation of the rubber gasket 40, refer to FIG. 23B. The ultrasonic reflector 41 is of tapered shape, with the tip facing the ultrasonic generator. The tubular electrodes can be arranged circularly, meanwhile, various ultrasonic energy converters are arranged circularly and also concentrically with the tubular electrodes.

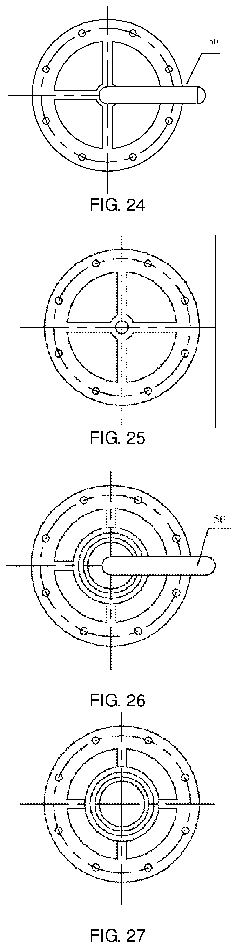

The inlet connection flange 1 and the outlet connection flange 6 can be connected separately with the inlet and outlet pipes using the fastening bolt. Flanges 35-1 and 35-2 are used for fixation of rod-shaped titanium anode 39, referring to FIG. 23A, FIG. 23B, FIG. 24 and FIG. 25. To reduce the water resistance, the plastic flange for electrode fixation adopts at most 6 uniformly distributed support rods, with the thickness of flanges 35-1 and 35-2 not less than 12mm; for the flange 35-1 with electrode lead 50, a $\Phi$3.5-$\Phi$5.0 mm through-hole accessible to the fixed round groove of the electrode is drilled centrally onto a support rod, with the depth of the fixed round groove up to 5-6mm; an electrode lead is laid to be connected with the rod-shaped titanium anode 39 and the output terminal i of the linear constant-current DC supply; waterproof sealing compound is used to seal the gap between the electrode and the groove of plastic flange 35-1, with the other end meshed with the fixed round groove of the plastic flange 35-2 without electrode lead, but not adhered securely for easy removal; flanges 36-1 and 36-2 are used for fixation of the porous tubular auxiliary electrode 37, referring to FIG. 23A, FIG. 23B, FIG. 26 and FIG. 27. Similarly, the plastic flange for electrode fixation adopts at most 6 uniformly distributed support rods to reduce the water resistance, with the thickness of flanges not less than 12mm; the diameter of circle for supporting the electrode ranges between the internal diameter $\Phi$-2mm and external diameter $\Phi$+ 2mm of the porous tubular auxiliary electrode; a plurality of annular grooves of 6-8mm in depth are arranged for fixation of anode according to the diameter and thickness of the porous tubular auxiliary electrode; for the flange 36-1 with electrode lead, a $\Phi$3.5-$\Phi$5.0mm circular notched through-hole accessible to the fixed electrode is drilled centrally onto a support rod; an electrode lead is laid to be connected with the porous tubular auxiliary electrode 37, and also connected with the output terminal iv, V of the DC constant-current power supply; then waterproof sealing compound is used to seal the gap between the electrode and the annular groove of plastic flange 36-1, with the other end of the auxiliary electrode 37 meshed with the annular groove of plastic flange 36-2 without electrode lead, but not adhered securely for easy removal; the gaskets 40 are added between the flanges, and the entire device is fixed securely with bolts; the tubular cathode 38 as water pipe is connected with the output terminals ii, iii of the DC constant-current power supply through the lead terminal 42 with copper backing, and the porous tubular cathode 37 and tubular cathode 38 are arranged coaxially with the rod-shaped titanium anode 39.

The output terminals i, iii and v of the linear constant-current DC supply are anode output terminals, and the ii and iv are cathode output terminals; in case electrolysis of seawater system is underway (conductivity bigger than 1500nS/cm), the controller is connected with the i and ii output terminals of the linear constant-current DC supply; in case electrolysis of fresh water system is underway (conductivity smaller than 1500nS/cm), the controller is connected with the i, iii and iv output terminals of the linear constant-current DC supply; in case pole-reversing descaling is underway, the controller is connected with the ii and V output terminals of the linear constant-current DC supply; the device can be operated stably and reliably in fresh water and seawater bodies.

The connection method and control mode between the controller and the power supply/linear constant-current DC supply of the detector and the ultrasonic generator are the same with preferred embodiment 1.

In the device, the linear constant-current DC supply adopts a 0-30V/800A linear power supply; the titanium screen (thickness: 1.5mm, mesh opening (central distance): 3.0mmX 6.0mm) is welded with titanium rod (width: 10mm, thickness: 1.5mm) into a porous titanium pipe (Φ=6Omm, length: 1030mm), and heated up for 3h at 120°C in air and then cooled down to room temperature at a rate of 1-2°C/min, so that the surface is uniformly coated with Ti02 as the porous tubular auxiliary electrode 37; the titanium pipe (Φ=108mm, δ=6.5mm, length: 1000mm) is processed in the same way as the cathode 38; the rod-shaped titanium anode 39 (Φ=20mm, length: 1060mm) coated with Pt and Ir oxides, and ultrasonic generator of 40W are used as the main body, enabling the sterilization algaecide of water bodies at a rate of 30M3/hr.

The device of the invention is applied to sterilization algaecide in fresh water and seawater, with the analytical results below:

**Test and operating conditions:**

(1) A 50M3 stainless steel water tank, with tap water as test water, and water quality indexes shown in table 1;

Table 1: quality of tap water for test:

| Cl-(ppm) | Hardeness $CaC0_3$ (ppm) | Alkalinity $CaC0_3$ (ppm) | pH | Conductivity $\mu$s/cm |
|---|---|---|---|---|
| 30-48 | 320 - 380 | 350 - 370 | 8.0-8.5 | 750 - 800 |

(2) Sea farming water pond with an area of 0. 8km2, and seawater quality indexes during test period (32 days) shown in Table 2;

Table 2: quality of seawater for test

| Salinity(s‰) | COD (ppm) | DO (ppm) | pH | Conductivity $\mu$s/cm |
|---|---|---|---|---|
| 30.1∼ 31.5 | 0.60-0.65 | 7.8-8.2 | 7.9-8.3 | 33200 - 34300 |

(3) Fresh water farming pond, with an area of 2200m2, and fresh water quality indexes during test period (30 days) shown in Table 3.

Table 3: quality of fresh water for test

| Cl- (ppm) | Hardness $CaCO_3$ (ppm) | Alkalinity $CaC0_3$ (ppm) | pH | Conductivity $\mu$s / cm |
|---|---|---|---|---|
| 25 - 36 | 430 - 480 | 450 - 510 | 7.7 - 8.2 | 950 - 1080 |

**Calculation:**

Pursuant to GB15979, the results are calculated based on 1.00ml water samples prior to and after treatment of micro-current electrolysis sterilization algaecide device, and the water samples are cultivated in the sterilized agar medium at 35±2°C for 48 hours, then the number of bacterial colonies are counted, the sterilizing efficiency η is calculated by Eq. (18), and 3 groups of parallel samples are tested to obtain the average value.

$$\eta = \{(M-N) / M\} \times 100\% \quad (18)$$

Where: N is the number of bacterial colonies of water samples after electrolysis,

M is the number of bacterial colonies of water samples prior to electrolysis.

The algaecide result is measured by approximate estimation of chlorophyll change, namely, the processed and unprocessed water is placed naturally for 24 hours, then the chlorophyll content of two water samples is measured for approximate estimation of the effect of killing the blue algae; although determination of the death or survival of most of the algae is difficult, the killed micro-organisms entering into the filtrate after filtration also contribute to the measurement of chlorophyll.

**Test results:**

(1) Test of tap water:

A. With the tank-type micro-current electrolysis sterilization algaecide device of sheet electrode with a capacity of 300M3/hr, the sterilization test is conducted by pumping 50M3 tap water into the device at a flow rate of 250M3/hr, and operated separately under 3 current densities; the titanium anode 12 and original cathode 13 are taken as electrolysis anode, and the auxiliary electrode 14 taken as cathode to test the total number of bacteria of raw and processed water as per GB15979 20; the sterilizing efficiency $\eta$ is calculated by Eq. (18), with the result listed in Table 4, showing that the working voltage is not more than 30V with good sterilization effect after the water body treated with the tank-type, ultrasonic enhanced micro-current electrolysis sterilization algaecide device.

Table 4: sterilization effect under different current densities

| Current density mA/cm2 | Coliform | Staphylococcu s aureus | Hay infusion bacteria | Working voltage (V) |
|---|---|---|---|---|
| 1.0 | 99.2 | 93.7 | 92.3 | 3.6 |
| 8.0 | 100 | 100 | 99.9 | 8.3 |
| 16.0 | 100 | 100 | 100 | 13 |

B. With the tubular micro-current electrolysis sterilization algaecide device with a capacity of 30M3/hr, the sterilization test is conducted by similarly pumping 50M3 tap water into the device at a flow rate of 30M3/hr, and operated separately under 3 current densities (due to different diameters of anodes, the working condition of electrolysis cannot be described accurately by current density, but preferably by total current 35A, 18A and 7A; the approximate current density specific to tubular anode 38 is 5.0 mA/cm2, 2.5 mA/cm2 and 1.0 mA/cm2); the original tubular cathode 38 and the rod-shaped titanium anode 39 are taken as electrolysis anode, and the auxiliary electrode 37 taken as cathode to test separately the total number of bacteria of raw and processed water as per GB15979; the sterilizing efficiency $\eta$ is calculated by Eq. (18), with the result listed in Table 5, showing that the working voltage is not more than 30V with good sterilization effect after the water body treated with the tank-type, ultrasonic enhanced micro-current electrolysis sterilization algaecide device.

Table 5: sterilization effect under different current densities

| Current density mA/cm2 specific to tubular anode 38 | Coliform | Staphylococ cus aureus | Hay infusion bacteria | Working voltage (V) |
|---|---|---|---|---|
| 1.0 | 99.5 | 93.2 | 90.2 | 5.8 |
| 2.5 | 99.9 | 100 | 98.5 | 8.3 |
| 5.0 | 100 | 100 | 100 | 15.8 |

(2) Sterilization algaecide for seawater farming pond

With the tank-type micro-current electrolysis sterilization algaecide device with a capacity of 300M3/hr, the water is pumped into the device at a flow rate of 300M3/hr, when the titanium anode 12 and cathode 13 are enabled, and auxiliary electrode is disabled; the current density is 16mA/cm2, and operating voltage is 6.4V; the processed water flows back to the farming pond along a 100m-long water channel, 6 hours per day for 32 days; the total aerobic count of the raw and processed water for the first and last day is tested as per GB15979; then the chlorophyll of raw water is compared with that of water processed after 24h to estimate the effect of killing the algae. The results are listed in Table 6, showing that the device can inhibit efficiently the growth of algae in the operating process.

Table 6: sterilization algaecide effect of seawater farming pond (current density is 16.0 mA/cm2)

| Date | Total aerobic count (cfu/g) | | Chlorophyl reduction (%) |
|---|---|---|---|
| | Raw water | Processed water | |
| 1st day | $1.9 \times 10^5$ | 5 | 93.2 |
| 30th day | $5.2 \times 10^3$ | 6 | 90.0 |

The operating voltage is kept stably at $3.2 \pm 0.2V$ during 32-day operating period, proving that no $CaCO_3$ is formed on the cathode surface of the micro-current electrolysis system.

(3) Sterilization algaecide for fresh water farming pond

With the tank-type micro-current electrolysis sterilization algaecide device with a capacity of 300M3/hr, the water is pumped into the device at a flow rate of 300M3/hr, when the titanium anode 12 and original cathode 13 are taken as electrolysis anode, and the auxiliary electrode 14 taken as cathode; the current density is 10mA/cm2, and operating voltage is 9.6V; the processed water flows back to the other side of the farming pond along a 65m-long water channel, 4 hours per day for 30 days; the total aerobic count of the raw and processed water for the first and last day is tested as per GB15979; then the chlorophyll of raw water is compared with that of water processed after 24h to estimate the effect of killing the algae. The results are listed in Table 7, showing that the device can inhibit efficiently the growth of algae in the operating process.

At the 22nd day, the operating voltage has gradually risen to 12.2V; with the current density of 8mA/cm2, the auxiliary electrode 14 is taken as anode for 20-minute pole-reversing electrolysis along with the original cathode 13, then the operating voltage is resumed to 9.6V, and resumed to 12V until 30th day.

Table 7: sterilization algaecide effect of fresh water farming pond (current density is 10.0mA/cm2)

| Date | Total aerobic count (cfu/g) | | Chlorophyl reduction (%) |
|---|---|---|---|
| | Raw water | Processed water | |
| 1st day | $2.8 \times 10^5$ | 15 | 902 |
| 30th day | $1.1 \times 10^3$ | 12 | 87.0 |

The bactericidal algaecide effect of the device of the invention can be seen clearly from the tests, and the device can also be applied to sterilization algaecide for seawater or fresh water; by adding an ultrasonic generator, the device can destroy the cells of a variety of bacteria and algae; the device has the advantages of automatic scaling, wide range of applications and simple structure. The protection scope of the invention is defined by the claims, hereinafter.

**Claims**

1. A micro-current electrolysis sterilization algaecide device intended to be operated for electrolysis of either seawater bodies or fresh water bodies, comprising:

  - a tank (5) having an inlet pipe (1) and an outlet pipe (6);
  - a solution conductivity detector (2) arranged in the inlet pipe;
  - an ultrasonic-enhanced micro-current generator comprising:

    ◦ a DC electrolysis power supply;
    ◦ an electrolysis electrode group (4), said electrolysis electrode group (4) comprising electrodes equidistantly arranged in the tank (5) with the order of an auxiliary electrode (14; 37) between an anode (12; 39) and a cathode(13; 38), the electrodes in the electrode group (4) being tubular electrodes or sheet electrodes, in the case the electrodes in the electrode group (4) are tubular electrodes, the tubular electrodes being further arranged coaxially along the radial direction;
    ◦ a plurality of electrode lead connectors;
    ◦ an ultrasonic generator (33); and
    ◦ an ultrasonic reflector (9; 41),

said ultrasonic generator (33) and said ultrasonic reflector (9) being arranged at both ends of the tank, said ultrasonic generator (33) comprising at least an ultrasonic energy converter (17); the group of electrodes (4) being positioned between the ultrasonic generator and the ultrasonic reflector (9),

- a controller comprising:

  ◦ a judging unit;
  ◦ an electrolysis-model unit which is avalaible in three types:

     ■ a seawater electrolysis-model unit, configured to control the auxiliary electrode (14; 37) in an inactive state, through electrolysis between the anode (12; 39) and the cathode (13; 38) after receiving trigger signals;
     ■ a fresh water electrolysis-model unit, configured to, after receiving trigger signals, control the auxiliary electrode (14; 37) being taken as cathode, the cathode (13; 38)- so-called original cathode (13; 38) - being taken as anode, and the attribute of the anode (12; 39) - so-called original anode (12; 39), remaining unchanged, and the corresponding electrode spacing is shortened to ½ of the so-called original spacing used in the seawater mode; and
     ■ a pole-reversing electrolysis model unit,

said judging unit being configured to, based on the conductivity value detected by the conductivity detector, trigger the corresponding seawater electrolysis-model unit, fresh water electrolysis-model unit and pole-reversing electrolysis-model unit, according to a conductivity value of above or below 1500 nS/cm; when the conductivity value is above 1500 nS/cm, triggering the seawater electrolysis-model unit, or when the conductivity value is below 1500 nS/cm, triggering the fresh water electrolysis-model unit, and when the fresh water electrolysis-model is used and that the electrolysis potential rises by 20% under the same current condition, indicating that cathode scaling occurs during electrolysis process; and when the electrolysis potential (U1 + U2 + U3) rises by 20 % under the same electrolysis current and in the same fresh water body, the pole-reversing electrolysis-model unit with the current density not bigger than 20mA/cm2 and pole-reversing electrolysis time not more than 1h,

  U1 comprising the electrode potential and polarization overpotential from anode oxidation;
  U2 being defined by the following formula:
  $U2 = IR = I \times (^d/S \times \mu)$; where I is the electrolysis current, R is the solution resistance, d is the electrode spacing, S is the electrolysis area and $\mu$ is the conductivity of water bodies; and
  U3 comprising electrode potential and polarization overpotential from cathode oxidation,

the pole-reversing electrolysis consisting in:

  ■ changing the polarity of the so-called orignial cathode (13; 38), functioning as an anode in the fresh water electrolysis-model unit, into cathode;
  ■ changing the polarity of auxiliary electrode (14; 37) into anode; and
  ■ disabling the so-called original anode (12; 39).

2. Device as claimed in Claim 1, wherein in case the electrode is a sheet electrode, the ultrasonic reflector (9) is of triangular prism or circular arc shape, with the edge of the prism or arc protruding towards the ultrasonic generator; in case the electrode is a tubular electrode, the ultrasonic reflector (41) is of tapered shape, with the tip facing the ultrasonic generator (33).

3. Device as claimed in Claim 1, wherein in case the electrode is a tubular electrode, the electrodes and ultrasonic energy converters are arranged concentrically.

4. Device as claimed in any of Claims 1-3, wherein the detector (2) is an inductive conductivity sensor or a conductivity transducer.

5. Device as claimed in any of Claims 1-3, wherein the anode (12; 39) takes either metallic titanium or titanium alloy as the substrate, onto which at least either of Pt, Ir, Ru, Rh, Pd, Os or oxide comprising Pt, Ir, Ru, Rh, Pd, Os, as well as oxide comprising at least Ta or Ti, are coated to form DSA.

6.  Device as claimed in any of Claims 1-5, wherein the auxiliary electrode (14; 37) and cathode (13; 38) take either metallic titanium or titanium alloy as the substrate, onto which oxide comprising at least either of Ta or Ti is coated.

7.  Device as claimed in any of Claims 1-6, wherein the ultrasonic reflector (9; 41) is made of at least either of plastics, metallic titanium, titanium alloy, stainless steel, carbon steel or copper alloy.

8.  Device as claimed in any of Claims 1-7, wherein the device also comprises a potentiometer or a residual chlorine electrode (7) and a residual chlorine transducer arranged in the outlet pipe (6) of the tank for detection of the chlorinity in electrolyzed solution; the electrolysis units adjust the electrolysis current and voltage according to the chlorinity.

9.  A sterilization algaecide method for water bodies using micro-current electrolysis sterilization algaecide device as defined in any of claims 1-8, comprising:

    1) Detecting the conductivity of the water body;
    2) Sending the conductivity value to the judging unit;
    3) Judging the conductivity value;
    4) When the conductivity value is above 1500 nS/cm, triggering the seawater electrolysis-model unit, or when the conductivity value is below 1500 nS/cm, triggering the fresh water electrolysis-model unit, and

    when the fresh water electrolysis-model is used and that the electrolysis potential rises by 20% under the same current condition, indicating that cathode scaling occurs during electrolysis process; and when the electrolysis potential (U1 + U2 + U3) rises by 20 % under the same electrolysis current and in the same fresh water body, triggering the pole-reversing electrolysis-model unit with the current density not bigger than 20mA/cm2 and pole-reversing electrolysis time not more than 1 h,

    U1 comprising the electrode potential and polarization overpotential from anode oxidation;
    U2 being defined by the following formula:
    U2 = IR = I x ($^d$/S x $\mu$); where I is the electrolysis current, R is the solution resistance, d is the electrode spacing, S is the electrolysis area and $\mu$ is the conductivity of water bodies; and
    U3 comprising electrode potential and polarization overpotential from cathode oxidation.


**Patentansprüche**

1.  Vorrichtung zur Sterilisation mit Algiziden durch Mikrostromelektrolyse, die dazu bestimmt ist, entweder zur Elektrolyse von Seewasserkörpern oder Frischwasserkörpern betrieben zu werden, und umfasst:

    - einen Tank (5) mit einem Einlassrohr (1) und einem Auslassrohr (6);
    - einen Lösungsleitfähigkeitsdetektor (2), der im Einlassrohr angeordnet ist;
    - einen ultraschallverstärkten Mikrostromgenerator, der umfasst:

      ◦ eine GS-Elektrolyse-Leistungsversorgung;
      ◦ eine Elektrolyseelektrodengruppe (4), wobei die Elektrolyseelektrodengruppe (4) Elektroden umfasst, die im Tank (5) mit der Reihenfolge einer Hilfselektrode (14; 37) zwischen einer Anode (12; 39) und einer Kathode (13; 38) in gleichen Abständen angeordnet sind, wobei die Elektroden in der Elektrodengruppe (4) rohrförmige Elektroden oder flächenförmige Elektroden sind, im Falle der Elektroden in der Elektrodengruppe (4) rohrförmige Elektroden sind, die rohrförmigen Elektroden ferner koaxial entlang der radialen Richtung angeordnet sind;
      ◦ eine Mehrzahl von Elektrodenleitungsanschlüssen;
      ◦ einen Ultraschallgenerator (33); und
      ◦ einen Ultraschallreflektor (9; 41),
      wobei der Ultraschallgenerator (33) und der Ultraschallreflektor (9) an beiden Enden des Tanks angeordnet sind, der Ultraschallgenerator (33) mindestens einen Ultraschallenergiewandler (17) umfasst, und die Gruppe von Elektroden (4) zwischen dem Ultraschallgenerator und dem Ultraschallreflektor (9) angeordnet ist,

    - eine Steuerung, die umfasst:

      ◦ eine Beurteilungseinheit;

◦ eine Elektrolyse-Modelleinheit, die in drei Typen verfügbar ist:

- eine Seewasserelektrolyse-Modelleinheit, die so ausgelegt ist, dass sie nach Empfang von Auslösesignalen die Hilfselektrode (14; 37) in einem inaktiven Zustand durch Elektrolyse zwischen der Anode (12; 39) und der Kathode (13; 38) steuert;
- eine Frischwasserelektrolyse-Modelleinheit, die so ausgelegt ist, dass sie nach Empfang von Auslösesignalen die Hilfselektrode (14; 37) steuert, die als Kathode genommen wird, wobei die Kathode (13; 38) - die sogenannte Originalkathode (13; 38) - als Anode genommen wird, und das Attribut der Anode (12; 39) - der sogenannten Originalanode (12; 39) - unverändert bleibt, und der entsprechende Elektrodenabstand auf 1/2 des sogenannten Originalabstands, der im Seewassermodus verwendet wird, verkürzt wird; und
- eine Polumkehrelektrolyse-Modelleinheit,

wobei die Beurteilungseinheit so ausgelegt ist, dass sie basierend auf dem durch den Leitfähigkeitsdetektor detektierten Leitfähigkeitswert die entsprechende Seewasserelektrolyse-Modelleinheit, Frischwasserelektrolyse-Modelleinheit und Polumkehrelektrolyse-Modelleinheit gemäß einem Leitfähigkeitswert von über oder unter 1500 nS/cm auslöst;

wobei sie, wenn der Leitfähigkeitswert über 1500 nS/cm liegt, die Seewasserelektrolyse-Modelleinheit auslöst oder,

wenn der Leitfähigkeitswert unter 1500 nS/cm liegt, die Frischwasserelektrolyse-Modelleinheit auslöst, und,

wenn das Frischwasserelektrolysemodell verwendet wird und das Elektrolysepotenzial unter den gleichen Strombedingungen um 20 % ansteigt, anzeigt, dass Kathodenskalierung während des Elektrolyseprozesses stattfindet; und, wenn das Elektrolysepotenzial $(U1 + U2 + U3)$ unter dem gleichen Elektrolysestrom und im gleichen Frischwasserkörper um 20 % ansteigt, die Polumkehrelektrolyse-Modelleinheit mit der Stromdichte von maximal 20 mA/cm2 und einer Polumkehrelektrolysezeit von maximal 1h auslöst, wobei U1 das Elektrodenpotenzial und die Polarisations-Überspannung aus der Anodenoxidation umfasst;

U2 durch die folgende Formel definiert ist:

$U2 = IR = I \times (^d/S \times \mu)$ ; wobei I der Elektrolysestrom ist, R der Lösungswiderstand ist, d der Elektrodenabstand ist, S der Elektrolysebereich ist, und $\mu$ die Leitfähigkeit der Wasserkörper ist; und

U3 das Elektrodenpotenzial und die Polarisations-Überspannung aus der Kathodenoxidation umfasst,

wobei die Polumkehrelektrolyse besteht in:

- einer Änderung der Polarität der sogenannten Originalkathode (13; 38), die in der Frischwasserelektrolyse-Modelleinheit als Anode fungiert, auf Kathode;
- Ändern der Polarität der Hilfselektrode (14; 37) auf Anode; und
- Deaktivieren der sogenannten Originalanode (12; 39) .

2. Vorrichtung nach Anspruch 1, wobei, falls die Elektrode eine flächenförmige Elektrode ist, der Ultraschallreflektor (9) die Form eines dreieckigen Prismas oder eines kreisförmigen Bogens aufweist, wobei die Kante des Prismas oder des Bogens in Richtung des Ultraschallgenerators vorsteht; falls die Elektrode eine rohrförmige Elektrode ist, der Ultraschallreflektor (41) eine konische Form aufweist, wobei die Spitze dem Ultraschallgenerator (33) zugewandt ist.

3. Vorrichtung nach Anspruch 1, wobei, falls die Elektrode eine rohrförmige Elektrode ist, die Elektroden und die Ultraschallenergiewandler konzentrisch angeordnet sind.

4. Vorrichtung nach einem der Ansprüche 1 bis 3, wobei der Detektor (2) ein induktiver Leitfähigkeitssensor oder ein Leitfähigkeitswandler ist.

5. Vorrichtung nach einem der Ansprüche 1 bis 3, wobei die Anode (12; 39) entweder metallisches Titan oder eine Titanlegierung als Substrat nimmt, auf das mindestens eines von Pt, Ir, Ru, Rh, Pd, Os oder Oxid, umfassend Pt, Ir, Ru, Rh, Pd, Os, sowie Oxid, umfassend mindestens Ta oder Ti, aufgetragen wird, um DSA zu bilden.

**6.** Vorrichtung nach einem der Ansprüche 1 bis 5, wobei die Hilfselektrode (14; 37) und die Kathode (13; 38) entweder metallisches Titan oder eine Titanlegierung als Substrat nehmen, auf das Oxid, umfassend mindestens eines von Ta oder Ti, aufgetragen wird.

**7.** Vorrichtung nach einem der Ansprüche 1 bis 6, wobei der Ultraschallreflektor (9; 41) aus mindestens einem von Kunststoff, metallischem Titan, Titanlegierung, Edelstahl, Kohlenstoffstahl oder Kupferlegierung hergestellt ist.

**8.** Vorrichtung nach einem der Ansprüche 1 bis 7, wobei die Vorrichtung außerdem ein Potenziometer oder eine Restchlor-Elektrode (7) und einen Restchlor-Wandler umfasst, das/die/der im Auslassrohr (6) des Tanks zur Detektion der Chlorinität in der elektrolysierten Lösung angeordnet ist; wobei die Elektrolyseeinheiten den Elektrolysestrom und die Elektrolysespannung gemäß der Chlorinität anpassen.

**9.** Verfahren zur Sterilisation mit Alg Algiziden für Wasserkörper unter Verwendung einer Vorrichtung zur Sterilisation mit Algiziden durch Mikrostromelektrolyse nach einem der Ansprüche 1 bis 8, umfassend:

> 1) Detektieren der Leitfähigkeit des Wasserkörpers;
> 2) Senden des Leitfähigkeitswerts an die Beurteilungseinheit;
> 3) Beurteilen des Leitfähigkeitswerts;
> 4) Auslösen der Seewasserelektrolyse-Modelleinheit, wenn der Leitfähigkeitswert über 1500 nS/cm liegt, oder Auslösen der Frischwasserelektrolyse-Modelleinheit, wenn der Leitfähigkeitswert unter 1500 nS/cm liegt, und Anzeigen, dass Kathodenskalierung während des Elektrolyseprozesses stattfindet, wenn das Frischwasserelektrolysemodell verwendet wird und das Elektrolysepotenzial unter den gleichen Strombedingungen um 20 % ansteigt; und Auslösen, wenn das Elektrolysepotenzial (U1 + U2 + U3) unter dem gleichen Elektrolysestrom und im gleichen Frischwasserkörper um 20 % ansteigt, der Polumkehrelektrolyse-Modelleinheit mit der Stromdichte von maximal 20 mA/cm2 und einer Polumkehrelektrolysezeit von maximal 1h,

> wobei U1 das Elektrodenpotenzial und die Polarisations-Überspannung Konzentrationspolarisation aus der Anodenoxidation umfasst;
> U2 durch die folgende Formel definiert ist:
> $U2 = IR = I \times (^d/S \times \mu)$; wobei I der Elektrolysestrom ist, R der Lösungswiderstand ist, d der Elektrodenabstand ist, S der Elektrolysebereich ist, und $\mu$ die Leitfähigkeit der Wasserkörper ist; und
> U3 das Elektrodenpotenzial und die Polarisations-Überspannung aus der Kathodenoxidation umfasst.

**Revendications**

**1.** Dispositif algicide de stérilisation par électrolyse à micro-courant, destiné à être actionné pour l'électrolyse soit de masses d'eau de mer soit de masses d'eau douce, comprenant :

> - un réservoir (5) ayant un conduit d'entrée (1) et un conduit de sortie (6) ;
> - un détecteur de conductivité de solution (2) disposé dans le conduit d'entrée ;
> - un générateur de micro-courant assisté par ultrasons comprenant :

> > ◦ une alimentation électrique d'électrolyse CC ;
> > ◦ un groupe d'électrodes d'électrolyse (4), ledit groupe d'électrodes d'électrolyse (4) comprenant des électrodes disposées de manière équidistante dans le réservoir (5) avec l'ordre d'une électrode auxiliaire (14 ; 37) entre une anode (12 ; 39) et une cathode (13 ; 38), les électrodes dans le groupe d'électrodes (4) étant des électrodes tubulaires ou des électrodes en feuille, dans le cas où les électrodes dans le groupe d'électrodes (4) sont des électrodes tubulaires, les électrodes tubulaires étant en outre disposées coaxialement le long de la direction radiale ;
> > ◦ une pluralité de connecteurs de fil d'électrode ;
> > ◦ un générateur d'ultrasons (33) ; et
> > ◦ un réflecteur d'ultrasons (9 ; 41),
> > ledit générateur d'ultrasons (33) et ledit réflecteur d'ultrasons (9) étant disposés aux deux extrémités du réservoir, ledit générateur d'ultrasons (33) comprenant au moins un convertisseur d'énergie ultrasonore (17) ; le groupe d'électrodes (4) étant positionné entre le générateur d'ultrasons et le réflecteur d'ultrasons (9),

- un dispositif de commande comprenant :

  ◦ une unité d'évaluation ;
  ◦ une unité de modèles d'électrolyse qui est disponible en trois types :

    ▪ une unité de modèle d'électrolyse d'eau de mer, configurée pour commander l'électrode auxiliaire (14 ; 37) dans un état inactif, par électrolyse entre l'anode (12 ; 39) et la cathode (13 ; 38) après réception de signaux de déclenchement ;
    ▪ une unité de modèle d'électrolyse d'eau douce, configurée pour, après réception de signaux de déclenchement, commander l'électrode auxiliaire (14 ; 37) qui est prise comme cathode, la cathode (13 ; 38) - appelée cathode initiale (13 ; 38) - étant prise comme anode, et l'attribut de l'anode (12 ; 39) - appelée anode initiale (12 ; 39) - restant inchangé, et l'espacement d'électrode correspondant est raccourci à 1/2 de l'espacement dit initial utilisé dans le mode d'eau de mer ; et
    ▪ une unité de modèle d'électrolyse à inversion de pôle,

    ladite unité d'évaluation étant configurée pour, sur la base de la valeur de conductivité détectée par le détecteur de conductivité, déclencher l'unité de modèle d'électrolyse d'eau de mer, l'unité de modèle d'électrolyse d'eau douce et l'unité de modèle d'électrolyse à inversion de pôles correspondantes, selon une valeur de conductivité au-dessus ou au-dessous de 1500 nS/cm ;
    lorsque la valeur de conductivité est au-dessus de 1500 nS/cm, déclencher l'unité de modèle d'électrolyse d'eau de mer, ou
    lorsque la valeur de conductivité est au-dessous de 1500 nS/cm, déclencher l'unité de modèle d'électrolyse d'eau douce, et
    lorsque le modèle d'électrolyse d'eau douce est utilisé et que le potentiel d'électrolyse augmente de 20 % sous la même condition de courant, indiquer qu'un dimensionnement de la cathode a lieu pendant le processus d'électrolyse ; et, lorsque le potentiel d'électrolyse (U1 + U2 + U3) augmente de 20 % sous le même courant d'électrolyse et dans la même masse d'eau douce, déclencher l'unité de modèle d'électrolyse à inversion de pôles avec la densité de courant qui n'est pas plus grande que 20 mA/cm$^2$ et une durée d'électrolyse à inversion de pôles qui n'est pas supérieure à 1 h,

      U1 comprenant le potentiel d'électrode et le surpotentiel de polarisation provenant d'une oxydation d'anode ;
      U2 étant défini par la formule suivante :
      $U2 = IR = I \times (d/S \times \mu)$ ; où I est le courant d'électrolyse, R est la résistance de solution, d est l'espacement d'électrode, S est la zone d'électrolyse, et $\mu$ est la conductivité de masses d'eau ; et
      U3 comprenant le potentiel d'électrode et le surpotentiel de polarisation provenant d'une oxydation de cathode,

  l'électrolyse à inversion de pôles consistant à :

    ▪ changer en cathode la polarité de la cathode dit initiale (13 ; 38), agissant comme anode dans l'unité de modèle d'électrolyse d'eau douce ;
    ▪ changer en anode la polarité de l'électrode auxiliaire (14 ; 37) ; et
    ▪ désactiver l'anode dite initiale (12 ; 39).

2. Dispositif selon la revendication 1, dans lequel, dans le cas où l'électrode est une électrode en feuille, le réflecteur d'ultrasons (9) est en forme de prisme triangulaire ou d'arc circulaire, avec le bord du prisme ou de l'arc faisant saillie vers le générateur d'ultrasons ; dans le cas où l'électrode est une électrode tubulaire, le réflecteur d'ultrasons (41) est de forme effilée, avec la pointe faisant face au générateur d'ultrasons (33).

3. Dispositif selon la revendication 1, dans lequel, dans le cas où l'électrode est une électrode tubulaire, les électrodes et les convertisseurs d'énergie ultrasonore sont disposés de manière concentrique.

4. Dispositif selon l'une quelconque des revendications 1 à 3, dans lequel le détecteur (2) est un capteur de conductivité inductif ou un transducteur de conductivité.

5. Dispositif selon l'une quelconque des revendications 1 à 3, dans lequel l'anode (12 ; 39) a soit du titane métallique soit un alliage de titane comme substrat, sur lequel au moins l'un parmi Pt, Ir, Ru, Rh, Pd, Os ou un oxyde comprenant Pt, Ir, Ru, Rh, Pd, Os, ainsi qu'un oxyde comprenant au moins Ta ou Ti, sont appliqués en revêtement pour former une DSA.

**6.** Dispositif selon l'une quelconque des revendications 1 à 5, dans lequel l'électrode auxiliaire (14 ; 37) et la cathode (13 ; 38) ont soit du titane métallique soit un alliage de titane comme substrat, sur lequel un oxyde comprenant au moins l'un parmi Ta ou Ti est appliqué en revêtement.

**7.** Dispositif selon l'une quelconque des revendications 1 à 6, dans lequel le réflecteur d'ultrasons (9 ; 41) est fait d'au moins l'un parmi une matière plastique, le titane métallique, un alliage de titane, l'acier inoxydable, l'acier au carbone ou un alliage de cuivre.

**8.** Dispositif selon l'une quelconque des revendications 1 à 7, dans lequel le dispositif comprend également un potentiomètre ou une électrode à chlore résiduel (7) et un transducteur de chlore résiduel disposés dans le conduit de sortie (6) du réservoir pour la détection de la chlorinité en solution électrolysée ; les unités d'électrolyse ajustent le courant et la tension d'électrolyse selon la chlorinité.

**9.** Procédé algicide de stérilisation pour des masses d'eau à l'aide d'un dispositif algicide de stérilisation par électrolyse à micro-courant tel que défini à l'une quelconque des revendications 1 à 8, comprenant :

1) détecter la conductivité de la masse d'eau ;
2) envoyer la valeur de conductivité à l'unité d'évaluation ;
3) évaluer la valeur de conductivité ;
4) lorsque la valeur de conductivité est au-dessus de 1500 nS/cm, déclencher l'unité de modèle d'électrolyse d'eau de mer, ou

lorsque la valeur de conductivité est au-dessous de 1500 nS/cm, déclencher l'unité de modèle d'électrolyse d'eau douce, et

lorsque le modèle d'électrolyse d'eau douce est utilisé et que le potentiel d'électrolyse augmente de 20 % sous la même condition de courant, indiquer qu'un dimensionnement de cathode a lieu pendant le processus d'électrolyse ; et, lorsque le potentiel d'électrolyse (U1 + U2 + U3) augmente de 20 % sous le même courant d'électrolyse et dans la même masse d'eau douce, déclencher l'unité de modèle d'électrolyse à inversion de pôles avec la densité de courant qui n'est pas plus grande que 20 mA/cm$^2$ et une durée d'électrolyse à inversion de pôles qui n'est pas supérieure à 1 h,

U1 comprenant le potentiel d'électrode et le surpotentiel de polarisation provenant d'une oxydation d'anode ;
U2 étant défini par la formule suivante :
U2 = IR = I x ($^d$/S x $\mu$) ; où I est le courant d'électrolyse, R est la résistance de solution, d est l'espacement d'électrode, S est la zone d'électrolyse, et $\mu$ est la conductivité de masses d'eau ; et
U3 comprenant le potentiel d'électrode et le surpotentiel de polarisation provenant d'une oxydation de cathode.

FIG. 1

FIG. 2a

FIG. 2b

FIG. 2c

FIG. 3

FIG. 4

FIG. 5A

FIG. 5B

FIG. 5C

FIG. 6

FIG. 7A

FIG. 7B

FIG. 7C

seawater electrolysis-model unit

pole-reversing electrolysis-model unit

judging unit

fresh water electrolysis-model unit

FIG. 8

FIG. 9A

FIG. 9B

FIG. 10

FIG. 11

FIG. 12A

FIG. 12B

FIG. 12C

FIG. 13

FIG. 14

FIG. 15

FIG. 16

FIG. 17

FIG. 18A

FIG. 18B

FIG. 19

FIG. 20

FIG. 21

FIG. 22

FIG. 23A

FIG. 23B

FIG. 24

FIG. 25

FIG. 26

FIG. 27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 02100332
- CN 200510025284
- CN 200510025395
- WO 03002406 A
- US 2005016933 A
- WO 2005061388 A
- US 2004099608 A
- US 2003029811 A
- JP 200714439K B
- JP 2006239556 B
- JP 2006263563 B
- JP 2005342626 B
- JP 20060099157 B
- JP 2006223997 B
- WO 2007114198 A
- CN 200510117457
- CN 99120675
- CN 200610085548
- DE 19919824
- CN 200610023241
- JP 2006007184 B
- JP 2005021814 B
- CN 1998236857
- WO 03095370 A
- JP 2007021287 B
- JP 2005270754 B
- JP 2005254138 B
- CN 20051114
- CN 200610093390
- US 2004134861 A
- US 2005211639 A
- WO 2004002895 A
- WO 2005110607 A
- CN 20060112
- CN 200520087812
- US 5738780 A
- CN 200610042972
- CN 200510111126
- CN 200520077629
- CN 200510023766
- WO 2006058261 A
- JP 2001000974 B
- CN 200510046991
- CN 200480027174
- CN 1999253589
- CN 03156596
- CN 200520114686
- CN 200620032114
- WO 9400860 A1
- GB 1597920 A

### Non-patent literature cited in the description

- **REN NANQI et al.** Microbiology of pollution control. Press of Harbin Institute of Technology, 2002, 38-39
- **LIU FUBIN.** *Ships,* August 2006, vol. 4
- ALGAL GROWTH INHIBITION EFFECTS AND INDUCEMENT MODES BY PLANT- PRODUCING PHENOLS SATOSHI NAKAI. **SATOSHI NAKAI.** Water Research. May 2001, vol. 35, 1855-1859
- *Water Research,* May 2002, vol. 36 (9), 2243-2254
- **ZHANG ZHAOXIAN.** Coated electrode with a history of 40 years. *Electroplating & Finishing,* 2007, vol. 26 (1